(19) Europäisches Patentamt
European Patent Office
Office européen des brevets

(11) **EP 3 503 734 B1**

(12) **EUROPÄISCHE PATENTSCHRIFT**

(45) Veröffentlichungstag und Bekanntmachung des Hinweises auf die Patenterteilung:
**22.01.2020   Patentblatt 2020/04**

(51) Int Cl.:
*A23C 3/033* (2006.01)   *A23L 2/46* (2006.01)
*A23L 3/22* (2006.01)   *F28F 27/00* (2006.01)
*A23L 3/00* (2006.01)

(21) Anmeldenummer: **17765076.9**

(22) Anmeldetag: **16.08.2017**

(86) Internationale Anmeldenummer:
**PCT/EP2017/000984**

(87) Internationale Veröffentlichungsnummer:
**WO 2018/036651 (01.03.2018 Gazette 2018/09)**

(54) **VERFAHREN UND ANORDNUNG ZUR ASEPTISCHEN ERHITZUNG EINES FLÜSSIGEN PRODUKTS IN EINER WÄRMETAUSCHEREINHEIT DER ERHITZERZONE EINER UHT-ANLAGE**

METHOD AND ARRANGEMENT FOR ASEPTIC HEATING OF A LIQUID PRODUCT IN A HEAT EXCHANGE UNIT OF THE HEATING ZONE OF A UHT-PLANT

PROCÉDÉ ET DISPOSITIF DE CHAUFFAGE ASEPTIQUE DE PRODUITS LIQUIDES DANS UNE UNITÉ D'ÉCHANGE THERMIQUE D'UNE ZONE DE CHAUFFE D'UNE INSTALLATION UHT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.08.2016   DE 102016010099**
**28.03.2017   DE 102017002981**

(43) Veröffentlichungstag der Anmeldung:
**03.07.2019   Patentblatt 2019/27**

(73) Patentinhaber: **GEA TDS GmbH**
**31157 Sarstedt (DE)**

(72) Erfinder:
• **SCHWENZOW, Uwe**
**48683 Ahaus (DE)**
• **SÜTHOLD, Erwin**
**46348 Raesfeld (DE)**
• **SCHLÖSSER, Wolfgang**
**48683 Ahaus (DE)**
• **TASLER, Franz**
**48653 Coesfeld (DE)**
• **ASSING, Hubert**
**48683 Ahaus (DE)**
• **DRECKMANN, Reinhold**
**48249 Dülmen (DE)**

(74) Vertreter: **Hauck Patentanwaltspartnerschaft mbB**
**Postfach 11 31 53**
**20431 Hamburg (DE)**

(56) Entgegenhaltungen:
WO-A1-2014/191062    DE-A1-102005 007 557
US-A- 4 584 932    US-A1- 2003 049 356
US-A1- 2015 320 088

**Beschreibung**

TECHNISCHES GEBIET

Die Erfindung betrifft ein Verfahren und eine Anordnung zur aseptischen Erhitzung eines flüssigen Produkts in einer Wärmeaustauschereinheit der Erhitzerzone einer UHT-Anlage, bei dem in der Wärmeaustauschereinheit zwischen dem flüssigen Produkt und einem Heizmedium ein indirekter Wärmeaustausch an einer Wand dadurch stattfindet, dass ein in einem Wärme abgebenden Heizmediumraum strömender Heizmediumstrom im Gegenstrom zu einem in einem Wärme aufnehmenden Produktraum strömenden Produktstrom geführt wird, bei dem der Produktstrom von einer Produkt-Eintrittstemperatur auf eine Produkt-Austrittstemperatur erhitzt wird und bei dem wenigstens die Produkt-Austrittstemperatur und die Heizmedium-Eintrittstemperatur überwacht und geregelt werden. Weiterhin betrifft die Erfindung eine Wärmeaustauschereinheit für eine solche Anordnung.

Bei den flüssigen Produkten, die der in Rede stehenden Wärmebehandlung unterzogen werden, kann es sich beispielsweise neben Milchprodukten auch um temperatursensible Lebensmittelprodukte, insbesondere Desserts oder dessertartige Produkte, mit der gesamten Bandbreite möglicher Viskositäten handeln. Die Erfindung entfaltet ihre beabsichtigte Wirkung besonders signifikant in einer Hocherhitzerzone einer UHT-Anlage. Der Wärmeaustauschereinheit ist in der Regel eine Behandlungszone vorgeordnet, wie beispielsweise eine Vorerhitzerzone, oder nachgeordnet, wie beispielsweise eine Heißhalte- oder Kühlzone.

STAND DER TECHNIK

Unter einem mit der eingangs genannten UHT-Anlage durchgeführten UHT-Verfahren (UHT: Ultra-Hoch-Temperatur) mit indirekter Produktbeheizung durch Wärmeaustausch mittels eines Wärmeträger- oder Heizmediums an einer Wand versteht man eine thermische Produktbehandlung, welche auch aseptische Erhitzung genannt wird, bei der so gut wie alle Mikroorganismen, mindestens jedoch alle zur Verderbnis führenden Mikroorganismen, abgetötet werden, die während der Lagerphase des Produktes bei Raumtemperatur heranwachsen können.

Die indirekte Produktbeheizung oberhalb von 100 °C wird besonders vorteilhaft durch einen Wärmeaustausch an einer Wand mit Rohr-Wärmeaustauschern, insbesondere einem sogenannten Rohrbündel-Wärmeaustauscher, durchgeführt. Bei dem letztgenannten wird die Wärmenergie durch die Rohrwände einer Gruppe von parallelen, vorzugsweise horizontal orientierten Innenrohren übertragen. Dabei strömt das zu behandelnde flüssige Produkt in den Innenrohren, während ein Heizmedium, in der Regel durch Wasserdampf erhitztes Wasser, im Ringspaltraum eines Mantelrohres, welches die parallel geschalteten Innenrohre umgibt, im Gegenstrom strömt. Ein diesbezüglicher Rohrbündel-Wärmeaustauscher ist aus der DE 94 03 913 U1 bekannt. Die indirekte Produktbeheizung der vorgenannten Art kann aber auch mit anderen Bauarten von Wärmeaustauschern, wie beispielsweise Platten-Wärmeaustauschern, erfolgen.

Eine bekannte UHT-Erhitzungsvorrichtung mit indirekter Produktbeheizung zur Herstellung einer UHT-Milch (DE 10 2005 007 557 A1) beinhaltet einen Vorwärmer in einer sog. Vorwärmzone für die Erwärmung der standardisierten Milch. Anschließend wird die Milch über einen sog. Homogenisator zur Fettfeinverteilung geführt und danach weiter vorgewärmt. Es folgt eine sog. Vorheißhaltung zur Stabilisierung der Milchproteine. Nach einem weiteren in der Regel "regenerativ" geführten Wärmeaustauscher, der für den nachfolgenden Milcherhitzungsprozess vorgesehen ist, erfolgt danach die eigentliche UHT-Erhitzung in einer sog. Erhitzerzone mit Heißhaltung, anschließend die Kühlung in einer Abkühlzone unter Wärmeaustausch mit einem "regenerativen" Wärmeträgermedium, in der Regel Wasser. Unter einem "regenerativen" Wärmeträgermedium, mit dem ein "regenerativ" geführter Wärmeaustausch durchgeführt wird, wird ein solches Wärmeträgermedium verstanden, welches im Kreislauf geführt wird und, bezogen auf die Fließrichtung des zu behandelnden flüssigen Produktes, Wärmeenergie aus dem Produkt in Bereichen hoher Temperatur aufnimmt und diese an das Produkt in Bereichen niedrigerer Temperatur "regenerativ" überträgt.

Ein regenerativer Wärmeaustausch der vorgenannten Art soll von der vorliegenden Erfindung ebenfalls umfasst sein, auch wenn sich nachfolgend die Darstellung der Erfindung auf ein Heizmedium beschränkt, das nicht flüssiges Produkt ist. Die in Rede stehende aseptische Erhitzung des flüssigen Produkts wird in einer Wärmeaustauschereinheit der Erhitzerzone einer UHT-Anlage, die insbesondere auch eine Hocherhitzerzone umfassen kann, durch ein Heizmedium, beispielsweise durch Wasserdampf erhitztes Wasser, bewirkt, das notwendigerweise eine Heizmedium-Eintrittstemperatur oberhalb der den aseptischen Erhitzungsprozess kennzeichnenden Produkt-Austrittstemperatur aus der Wärmeaustauschereinheit aufweist. Die aseptische Erhitzung ist produktspezifisch und vollzieht sich im nachfolgenden Ausführungsbeispiel zwischen einer Produkt-Eintrittstemperatur $T_{PE}$ = 125 °C und einer Produkt-Austrittstemperatur $T_{PA}$ = 140 °C, wobei die produktbeaufschlagten Wände der Wärmeaustauschereinheit, über die sich der indirekte Wärmeaustausch vollzieht, zur Sicherstellung der notwendigen Triebkräfte für den Wärmeübergang zwischen Wand und flüssigem Produkt und der gebotenen Wirtschaftlichkeit des Wärmeaustauschs eine höhere Temperatur im zugeordneten Temperaturverlauf besitzen müssen. Derart hohe Wandtemperaturen sind problematisch, wie nachfolgend dargelegt wird.

Bei dem in Rede stehenden Erhitzungsverfahren kommt es insbesondere im Erhitzerteil und in der nachgeschalteten, nicht von außen beheizten Heißhaltestrecke oder dem Heißhalter zu mehr oder weniger starken Ablagerungen. Hitzeempfindliche bzw. temperatursensible flüssige Produkte, wobei nachfolgend unter diesem Oberbegriff insbesondere ein flüssiges Lebensmittelprodukt verstanden werden soll, können relativ viel Proteine, viel Trockenmasse und wenig Wasser enthalten, und sie können die ganze Bandbreite möglicher Viskositäten besitzen. Die diesbezüglichen flüssigen Produkte neigen, vorzugsweise bei Temperaturen über 100 °C, zum Anbrennen, d.h. unter diesen Bedingungen zur Belagbildung an den Wandungen der Wärmeaustauschereinheit. Diese Belagbildung wird auch als Produkt-"Fouling" bezeichnet und kann zu Qualitätsproblemen beim erhitzten flüssigen Produkt, einem End- oder Zwischenprodukt, und/oder zu ernsthaften Reinigungsproblemen führen. Letztere erfordern intensive Reinigungszyklen und damit verkürzte Betriebszeiten der Wärmeaustauschereinheit. Das Produkt-Fouling verringert somit die Standzeit bzw. die Betriebszeit der Wärmeaustauschereinheit zwischen zwei Reinigungszyklen und ist unerwünscht.

In jedem Falle muss angestrebt werden, dass einerseits alle zeitgleich und andererseits alle in zeitlicher Abfolge strömende Teilmengen des zu behandelnden flüssigen Produkts, insbesondere im Hocherhitzerteil und in der Heißhaltung, möglichst der gleichen Verweilzeit unterliegen, da sich unterschiedliche Verweil- und damit Einwirkungszeiten, insbesondere bei hohen Einwirkungstemperaturen, nachteilig in der vorstehend beschriebenen Weise auswirken. Die Belagbildung an den heißen Wandungen während der UHT-Erhitzung kann durch eine geregelte Erhitzung der flüssigen Produkte in der Vorwärmzone mit gewisser Haltezeit deutlich reduziert werden. Daher ist es wichtig, dass die oberstromig der Wärmeaustauschereinheit angeordnete Prozesseinheit das aseptisch zu erhitzende flüssige Produkt mit der erforderlichen Produkt-Eintrittstemperatur $T_{PE}$ bereitstellt.

Die vorliegende Problematik und die diesbezüglichen Nachteile des Standes der Technik sollen nachfolgend anhand einer bekannten Wärmeaustauschereinheit und eines mit dieser durchführbaren bekannten Verfahrens, von denen die vorliegende Erfindung ausgeht, verdeutlicht werden. Es zeigen

**Figur 1** in schematischer Darstellung einen Ausschnitt aus einer UHT-Anlage zur aseptischen Erhitzung eines flüssigen Produkts in einer Wärmeaustauschereinheit der Erhitzer- oder Hocherhitzerzone und

**Figur 2** eine qualitative Darstellung der Temperatur-Verläufe des zu erhitzenden flüssigen Produkts und des Wärme abgebenden Heizmediums, wobei die Temperaturen auf der Ordinate und ein variabler Wärmeaustauschweg in einer schematisch dargestellten Wärmeaustauschereinheit auf der Abszisse aufgetragen sind.

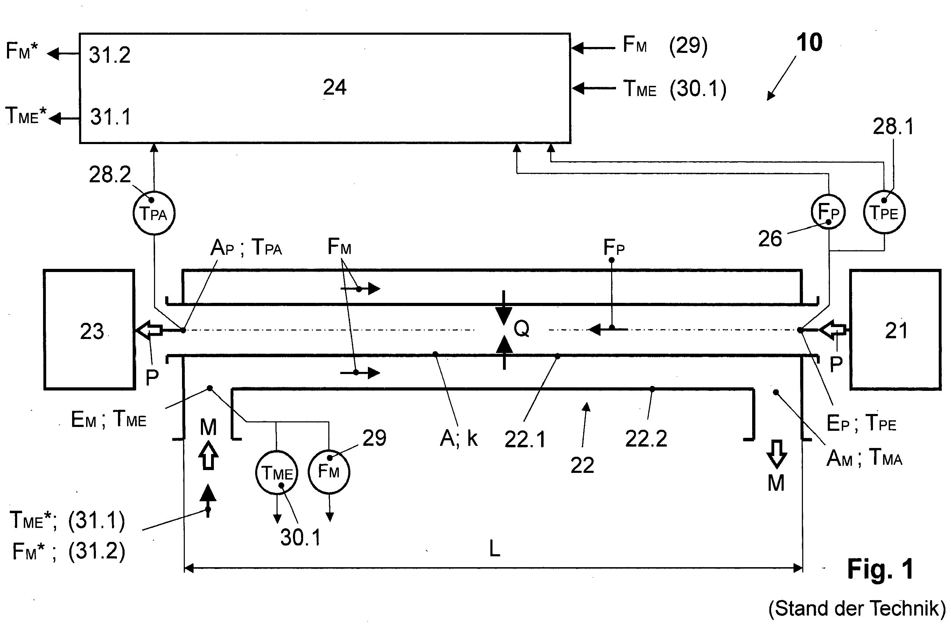

Ein Ausschnitt aus einer Anordnung 10 nach dem Stand der Technik (**Figur 1**), die in ihrer nicht dargestellten Gesamtheit als UHT-Anlage zur aseptischen Erhitzung eines flüssigen Produkts P ausgebildet ist, verfügt in ihrer Erhitzer- oder Hocherhitzerzone über wenigstens eine Wärmeaustauschereinheit 22, der, in Strömungsrichtung des flüssigen Produkts P gesehen, eine vorgeordnete Prozesseinheit 21, beispielsweise ein Wärmeaustauscher einer Vorerhitzerzone, vorgeordnet und eine nachgeordnete Prozesseinheit 23, beispielsweise eine Heißhaltestrecke in Form eines Heißhalters, nachgeordnet ist. Die schematische Darstellung der Wärmeaustauschereinheit 22 kann für einen Rohr-Wärmeaustauscher, vorzugsweise ein sogenannter Rohrbündel-Wärmeaustauscher, oder aber auch für eine andere Bauart stehen, wobei jede dieser Ausführungsformen in mehrere hintereinander geschaltete Sektionen unterteilt sein können. Entscheidend ist, dass zwischen einem Produkt-Eingang $E_P$ und einem Produkt-Ausgang $A_P$ eines Wärme aufnehmenden Produktraumes 22.1, der von einem Produktstrom Fp des flüssigen Produkts P, bezogen auf die Zeichnungslage, von rechts nach links durchströmt wird, ein gesamter Wärmeaustauschweg L gebildet wird. Der Produktstrom $F_P$ tritt mit einer Produkt-Eintrittstemperatur $T_{PE}$ in den Produkt-Eingang $E_P$ ein und mit einer Produkt-Austrittstemperatur $T_{PA}$ aus dem Produkt-Ausgang Ap aus.

Der Produktraum 22.1 steht im indirekten Wärmeaustausch mit einem Wärme abgebenden Heizmediumraum 22.2, der zwischen einem Heizmedium-Eingang $E_M$ und einem Heizmedium-Ausgang $A_M$ von einem Heizmediumstrom $F_M$ eines Heizmediums M im Gegenstrom zum Produktstrom $F_P$ durchströmt ist. Der Heizmediumstrom $F_M$ tritt mit einer Heizmedium-Eintrittstemperatur $T_{ME}$ in den Heizmedium-Eingang $E_M$ ein und mit einer Heizmedium-Austrittstemperatur $T_{MA}$ aus dem Heizmedium-Ausgang $A_M$ aus. Zwischen Heizmediumraum 22.2 und Produktraum 22.1 wird ein Wärmestrom Q ausgetauscht. Die vorstehend mit "-strom" bezeichneten Größen sind als zeitbezogene physikalische Größen zu verstehen, nämlich Masse/Zeit (Kilogramm/Sekunde; kg/s) oder Volumen/Zeit (Liter/Sekunde; dm$^3$/s) und Wärmemenge/Zeit (Joule/Sekunde = Watt; J/s = W).

Eine Messeinrichtung für Produktstrom 26 misst den Produktstrom $F_P$, eine Messeinrichtung für Produkt-Eintrittstemperatur 28.1 misst die Produkt-Eintrittstemperatur $T_{PE}$ und eine Messeinrichtung für Produkt-Austrittstemperatur 28.2 misst die Produkt-Austrittstemperatur $T_{PA}$, eine Messeinrichtung für Heizmediumstrom 29 misst den Heizmediumstrom $F_M$ und eine Messeinrichtung für Heizmedium-Eintrittstemperatur 30.1 misst die Heizmedium-Eintrittstemperatur $T_{ME}$.

Die vorstehend aufgelisteten Messgrößen $F_P$, $T_{PE}$, $T_{PA}$, $F_M$ und $T_{ME}$ werden an eine Steuerungs- und Regelungseinheit 24 übermittelt, die an einem Ausgang für Soll-Medium-Eintrittstemperatur 31.1 ein Steuersignal für eine Soll-Medium-Eintrittstemperatur $T_{ME}{}^{*}$ und an einem Ausgang für Soll-Heizmediumstrom 31.2 ein Steuersignal für einen Soll-Heizmediumstrom $F_M{}^{*}$ bereitstellt, wobei beide Steuersignale im Heizmedium-Eingang $E_M$ für das Heizmedium M wirksam werden.

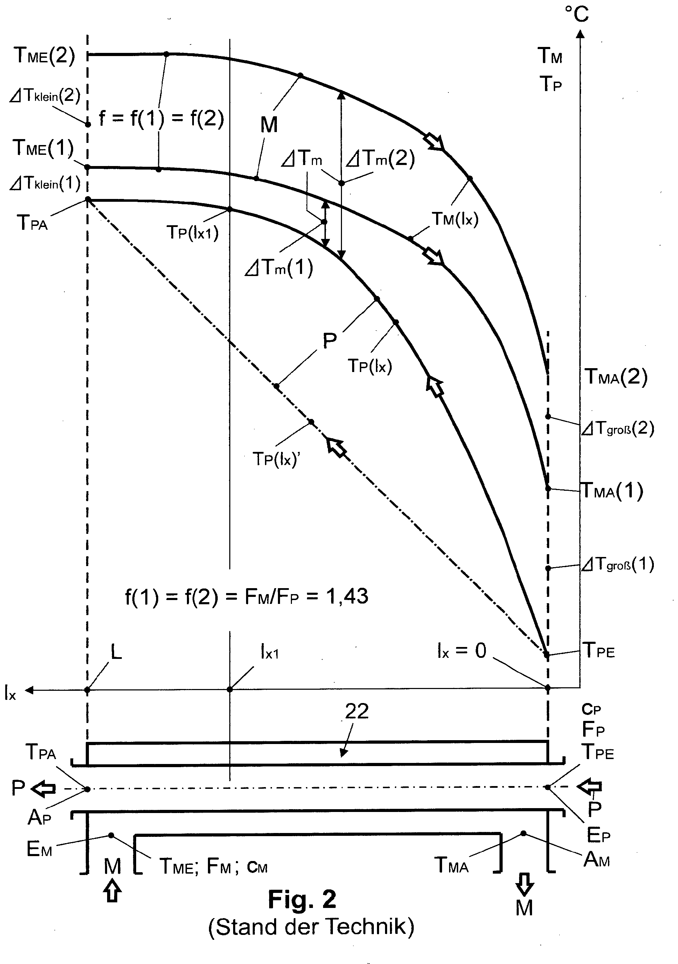

Über die Betriebszeit einer Wärmeaustauschereinheit 22 der in Rede stehenden Art, wobei die Betriebszeit in der Regel der sogenannten Standzeit zwischen zwei notwendigen Reinigungszyklen entspricht, werden in der Praxis die in **Figur 2** dargestellten Temperaturverläufe $T_P(l_x)$ und $T_M(l_x)$ beobachtet. Zugeordnete Produkt-Temperaturen $T_P$ und zugeordnete Heizmedium-Temperaturen $T_M$ (beide der Ordinate zugeordnet, z.B. in Grad Celsius (°C)) sind hier über einem variablen Wärmeaustauschweg $l_x$ (Abszisse) aufgetragen. Der variable Wärmeaustauschweg $l_x$ hat seinen Ursprung ($l_x = 0$) im Produkt-Eingang Ep, und er endet im Produkt-Ausgang $A_P$ nach Vollzug des gesamten Wärmeaustauschweges L ($l_x = L$).

Mit $T_P(l_x)$ ist der produktspezifische Temperaturverlauf des zu behandelnden und vorgegebenen und Wärme aufnehmenden Produktstroms $F_P$ zwischen der durch die vorgeordnete Prozesseinheit 21 bereitgestellten Produkt-Eintrittstemperatur $T_{PE}$ (z.B. 125 °C) und der zur Sicherstellung einer hinreichenden aseptischen Erhitzung notwendigen Produkt-Austrittstemperatur $T_{PA}$ (z.B. 140 °C) bezeichnet. Mit $T_M(l_x)$ sind zwei heizmediumspezifische Temperaturverläufe des Wärme abgebenden Heizmediumstroms $F_M$ bezeichnet. Der, bezogen auf die Zeichnungslage, untere Temperaturverlauf zwischen einer ersten Heizmedium-Eintrittstemperatur $T_{ME}(1)$ (z.B. 140,9 °C) und einer ersten Heizmedium-Austrittstemperatur $T_{MA}(1)$ (z.B. 130,6 °C) liegt zu Beginn der Betriebszeit vor, wenn die Wärmeaustauschereinheit 22 produktseitig noch frei von jeglichen Ablagerungen (Produkt-Fouling) ist.

Die Temperaturdifferenz $T_{ME}(1)$ - $T_{MA}(1)$ resultiert aus der nachfolgenden Bilanzgleichung (1):

$$Q = F_P c_P (T_{PA} - T_{PE}) = F_M c_M (T_{ME}(1) - T_{MA}(1)) = A\, k\, \Delta T_m, \qquad (1)$$

wobei mit A eine gesamte Wärmeaustauschfläche der Wärmeaustauschereinheit 22, mit k eine Wärmedurchgangszahl (siehe **Figur 1**), mit $\Delta T_m$ die mittlere logarithmische Temperaturdifferenz (siehe **Figur 2**), mit $c_P$ eine spezifische Wärmekapazität des flüssigen Produkts P und mit $c_M$ eine spezifische Wärmekapazität des Heizmediums M bezeichnet ist.

Für Gegenstrom am Anfang der Betriebszeit (Kennzeichnung (1) in **Figur 2**) gilt für die in Gleichung (1) enthaltene mittlere logarithmische Temperatur-Differenz $\Delta T_m$ nach Gleichung (2.1) mit der ersten Heizmedium-Eintrittstemperatur $T_{ME}(1)$ und der ersten Heizmedium-Austrittstemperatur $T_{MA}(1)$ eine erste mittlere logarithmische Temperatur-Differenz $\Delta T_m(1)$, wobei sich der letzte Term der Gleichung (2.1) mit den üblichen Abkürzungen $\Delta T_{groß}(1)$ und $\Delta T_{klein}(1)$ für die jeweiligen endseitigen Temperaturdifferenzen ergibt:

$$\Delta T_m(1) = \frac{(T_{MA}(1) - T_{PE}) - (T_{ME}(1) - T_{PA})}{ln\frac{T_{MA}(1) - T_{PE}}{T_{ME}(1) - T_{PA}}} = \frac{\Delta T_{groß}(1) - \Delta T_{klein}(1)}{\frac{\Delta T_{groß}(1)}{\Delta T_{klein}(1)}}. \qquad (2.1)$$

Im Verlauf der Betriebszeit wachsen die Ablagerungen produktseitig stetig auf und die Wärmedurchgangszahl k vermindert sich dadurch ebenfalls stetig. Die zu Anfang der Betriebszeit bereitgestellten Temperaturdifferenzen zwischen flüssigem Produkt P und Heizmedium M reichen dann nicht mehr aus, um den notwendigen Wärmestrom Q zur Erhitzung des Produktstromes $F_P$ auf die notwendige Produkt-Austrittstemperatur $T_{PA}$ zu übertragen. Am Ende der Betriebszeit, nach beispielsweise 12 Stunden, hat die Steuerungs- und Regelungseinheit 24 die Heizmedium-Eintrittstemperatur $T_{ME}$ so weit angehoben, dass nunmehr am Heizmedium-Eingang $E_M$ eine zweite Heizmedium-Eintrittstemperatur $T_{ME}(2)$ (z.B. 144,5 °C) notwendig ist, aus der nach Gleichung (1) eine zweite Heizmedium-Austrittstemperatur $T_{MA}(2)$ (z.B. 134,2 °C) resultiert.

Für das Ende der Betriebszeit (Kennzeichnung (2) in **Figur 2**) ergibt sich nach Gleichung (2.2), analog zu Gleichung (2.1), mit der zweiten Heizmedium-Eintrittstemperatur $T_{ME}(2)$ und der zweiten Heizmedium-Austrittstemperatur $T_{MA}(2)$ und den vorstehend eingeführten und entsprechend angepassten Abkürzungen ($\Delta T_{groß}(2)$, $\Delta T_{klein}(2)$) eine zweite mittlere logarithmische Temperatur-Differenz $\Delta T_m(2)$:

$$\Delta T_m(2) = \frac{(T_{MA}(2) - T_{PE}) - (T_{ME}(2) - T_{PA})}{ln\frac{T_{MA}(2) - T_{PE}}{T_{ME}(2) - T_{PA}}} = \frac{\Delta T_{groß}(2) - \Delta T_{klein}(2)}{\frac{\Delta T_{groß}(2)}{\Delta T_{klein}(2)}}. \qquad (2.2)$$

Die sich am Heizmedium-Ausgang $A_M$ zwangsläufig einstellende zweite Heizmedium-Austrittstemperatur

$T_{MA}(2)$ ist, wie aus Gleichung (1) mit entsprechenden Größen ableitbar ist, im Wesentlichen abhängig von einem zweiten Massenstromverhältnis f(2), gebildet als Quotient aus einem zweiten Heizmediumstrom $F_M(2)$ und dem Produktstrom Fp einerseits (f(2) = $F_M(2)/F_P$; allgemein: f = $F_M/F_P$), den jeweiligen spezifischen Wärmekapazitäten $c_M$ des Heizmediums M und $c_P$ des flüssigen Produkts P sowie von den durch die aufwachsenden Ablagerungen auch beeinflussten Wärmedurchgangsbedingungen (gekennzeichnet durch die Wärmedurchgangszahl k) an den Wänden der Wärmeaustauschereinheit 22, an denen sich der Wärmeaustausch vollzieht. Im vorliegenden Falle wird, um sicher zu gehen, dass die notwendige Produkt-Austrittstemperatur $T_{PA}$ unter allen Betriebsbedingungen sichergestellt ist, die Wärmeaustauschereinheit 22 über die gesamte Betriebszeit - dies gilt somit auch für den sich am Anfang der Betriebszeit einstellenden unteren heizmediumspezifischen Temperaturverlauf mit einem ersten Heizmediumstrom $F_M(1)$, d.h. mit f(1) = $F_M(1)/F_P$ - mit einem konstanten Massenstrom-Verhältnis f gefahren, wobei der Heizmediumstrom $F_M$ den Produktstrom $F_P$ um fast 50 % übersteigt (f = f(1) = f(2) = 1,43 = konstant; **Figur 2**).

Eine weitere Steigerung der Heizmedium-Eintrittstemperatur $T_{ME}$ ist nicht weiter möglich, weil die Heizleistung über das Heizmedium M nicht weiter gesteigert werden kann oder darf und/oder weil der produktseitige Druckverlust durch die aufgewachsenen Ablagerungen ein zulässiges Maß übersteigt.

Die über die Betriebszeit aufgewachsenen Ablagerungen erkennt der Fachmann auch an der mittleren logarithmischen Temperaturdifferenz $\Delta T_m$, die nach Gleichung (1) erforderlich ist, um den Wärmestrom Q im jeweiligen Beladungszustand der Wärmeaustauschereinheit 22 mit diesen Ablagerungen zu übertragen. Im vorliegenden Falle ist zu Beginn der Betriebszeit die erste mittlere logarithmische Temperaturdifferenz $\Delta T_m(1)$ = 2,6 °C und zum Ende der Betriebszeit ist die zweite mittlere logarithmische Temperaturdifferenz $\Delta T_m(2)$ = 6,6 °C.

Wie **Figur 1** zeigt, werden an der Wärmeaustauschereinheit 22 in der Anordnung 10 nach dem Stand der Technik notwendigerweise die Produkt-Eintrittstemperatur $T_{PE}$, die Produkt-Austrittstemperatur $T_{PA}$, die Heizmedium-Eintrittstemperatur $T_{ME}$ sowie der Produktstrom Fp und der Heizmediumstrom $F_M$ an dem jeweils zugeordneten Produkt-Eingang $E_P$, bzw. dem Produkt-Ausgang $A_P$ bzw. dem Heizmedium-Eingang $E_M$ gemessen und zur Steuerung bzw. Regelung herangezogen. Temperaturen $T_P$ des Produktstroms $F_P$ innerhalb des Wärme aufnehmenden Produktraumes 22.1 und Temperaturen $T_M$ des Heizmediumstroms $F_M$ innerhalb und in der Erstreckungsrichtung des Wärme abgebenden Heizmediumraumes 22.2 werden nicht erfasst, sodass die tatsächlichen Temperaturverläufe im Verlauf der Betriebszeit mit Ausnahme der vorstehend genannten Randtemperaturen $T_{PA}$, $T_{PE}$ und $T_{ME}$ nicht bekannt sind.

Ein in **Figur 2** mit $T_P(l_x)$' bezeichneter produktspezifischer Grenz-Temperatur-Verlauf des Produktstroms $F_P$ ist hinsichtlich seines linearen Verlaufs zwischen Produkt-Eintrittstemperatur $T_{PE}$ und Produkt-Austrittstemperatur $T_{PA}$, ebenso wie ein nicht dargestellter linearer Temperaturverlauf im Heizmediumstrom $F_M$, theoretischer Natur. Diese linearen Verläufe träten nur ein, wenn die spezifische Wärmekapazitäten $c_P$ und $c_M$ von Produkt P bzw. Heizmedium M sowie die den Wärmedurchgang, gekennzeichnet durch die Wärmedurchgangszahl k, bestimmenden physikalischen Größen von der Temperatur unabhängig wären und eine quantitativ und qualitativ gleichmäßige Belagbildung über die gesamte Wärmeaustauscherfläche A stattfände, was in der Praxis nicht der Fall ist. Gleichwohl ist es im Rahmen der zur Verfügung stehenden Einflussgrößen erstrebenswert, den tatsächlichen produktspezifischen Temperatur-Verlauf $T_P(l_x)$ und den heizmediumspezifischen Temperatur-Verlauf $T_M(l_x)$ so nah wie möglich an den jeweiligen linearen Grenztemperatur-Verlauf heranzuführen, weil dadurch der quantitative Wärmeaustausch über den gesamten Wärmeaustauschweg L hinweg gleichmäßiger wird.

Anhand des Fallbeispiels nach **Figur 2** und den diesem zugrundeliegenden Auslegungsdaten zeigt sich durch Messung im Produktstrom $F_P$, dass nach einem diskreten Wärmeaustauschweg $l_x = l_{x1}$, etwa bereits zu Beginn des letzten Drittels des gesamten Wärmeaustauschwegs L, eine diskrete Temperatur des flüssigen Produkts $T_P(l_{x1})$ vorliegt, die nahezu der erst am Produkt-Ausgang $A_P$ geforderten Produkt-Ausgangstemperatur $T_{PA}$ entspricht. Dieser Sachverhalt ist ohne diskrete Messung bei der Auslegung der Wärmeaustauschereinheit 22 und bei der Festlegung der Betriebsdaten nicht so ohne Weiteres vorhersehbar, zumal die Wärmeaustauschereinheit 22 aus Sicherheitsgründen mit dem vorstehend erwähnten Massenstrom-Verhältnis f = 1,43 betrieben wird. Darüber hinaus werden in einer Anordnung 10 der in Rede stehenden Art unterschiedlichste flüssige Produkte P mit unterschiedlichsten Rezepturen wärmebehandelt, wobei unterschiedlichste Rohstoffvoraussetzungen, Viskositäten, Qualitätskriterien und Produktionsbedingungen zu berücksichtigen sind. Es ist davon auszugehen, dass der vorgenannte Sachverhalt, der im Endergebnis bedeutet, dass die Wärmeaustauschereinheit 22 entweder überdimensioniert ist oder nicht optimal betrieben wird, unter den erwähnten, zu erfüllenden Randbedingungen kein Einzelfall ist.

Aus dem dargestellten Fallbeispiel sind noch weitere Nachteile ersichtlich, die eine undefinierte Verweilzeit des flüssigen Produkts P auf dem Niveau der Produkt-Austrittstemperatur $T_{PA}$ und das Maß und die Verteilung der Belagbildung, jeweils in der Wärmeaustauschereinheit 22, betreffen.

Es ist bekannt, dass die Neigung zur Belagbildung und die Geschwindigkeit des Belagaufbaus nicht nur von der Höhe der Temperatur der Wärme abgebenden Wand an sich, sondern entscheidend auch von der Differenz zwischen der Wandtemperatur und der Temperatur des flüssigen Produkts P an dieser Stelle signifikant beeinflusst wird. Im Fallbeispiel nach **Figur 2** sind am Produkt-Ausgang $A_P$ bzw. Heizmedium-Eingang $E_M$ die Produkt-Temperatur $T_P$ und damit zwangsläufig auch die Heizmedium-Temperatur $T_M$ jeweils am höchsten, wobei zu Beginn der Betriebszeit die notwendige Temperaturdifferenz zwischen der ersten Heizmedium-Eintrittstemperatur $T_{ME}(1)$ und der Produkt-Eintrittstemperatur $T_{PE}$ möglichst klein gehalten wird (im Fallbeispiel ist $T_{ME}(1) - T_{PA} = \Delta T_{klein}(1) = 0{,}9\ °C$).

Am Produkt-Eingang $E_P$ bzw. Heizmedium-Ausgang $A_M$ sind die Produkt-Eintrittstemperatur $T_{PE}$ und damit auch die Heizmedium-Austrittstemperatur $T_{MA}$ naturgemäß am niedrigsten, wobei zu Beginn der Betriebszeit nach Gleichung (1) die Änderung der Heizmedium-Temperatur $T_M$ zwischen Heizmedium-Eingang $E_M$ und -Ausgang $A_M$ nicht nur von der notwendigen Temperaturdifferenz zwischen der Produkt-Austrittstemperatur $T_{PA}$ und der Produkt-Eintrittstemperatur $T_{PE}$, sondern auch von dem Massenstrom-Verhältnis $f = f(1) = 1{,}43$ abhängt. Im Fallbeispiel ist $T_{MA}(1) - T_{PE} = \Delta T_{groß}(1) = 5{,}6\ °C$. Die Temperaturdifferenz $T_M - T_P$ steigt somit in der sauberen, nicht von Produkt-Fouling belegten Wärmeaustauschereinheit 22 vom Produkt-Ausgang Ap mit $\Delta T_{klein}(1) = 0{,}9\ °C$ zum Produkt-Eingang $E_P$ mit $\Delta T_{groß}(1) = 5{,}6\ °C$ (Faktor 6,2) stetig an, wodurch im Laufe der Betriebszeit zur durch den produktspezifischen Temperaturverlauf $T_P(I_x)$ bedingten Belagbildung ein weiterer Aufwuchs an Belag hinzukommt, der näherungsweise proportional zur Temperaturdifferenz $T_M - T_P$ ist und am Anfang der Betriebszeit um Faktor 6,2 gespreizt ist.

Am Ende der Betriebszeit ergibt sich im Fallbeispiel $T_{ME}(2) - T_{PA} = \Delta T_{klein}(2) = 4{,}5\ °C$ und $T_{MA}(2) - T_{PE} = \Delta T_{groß}(2) = 9{,}2\ °C$ (etwa Faktor 2). Insgesamt gesehen stellt man über die Betriebszeit fest, dass der Belag überall auf dem gesamten Wärmeaustauschweg L kontinuierlich aufwächst, wobei die Belagdicke vom Produkt-Ausgang $A_P$ zum Produkt-Eingang $E_P$ zunimmt, weil in dieser Richtung und zu allen Zeiten die Temperaturdifferenzen zwischen Heizmedium M und damit der Wand und flüssigem Produkt P zunehmen. Der Belag hat signifikanten Einfluss auf den produktseitigen Wärmeübergang und damit auf die Wärmedurchgangszahl k. Da die Wärmeaustauschereinheit 22 über die gesamte Betriebszeit mit einem konstanten Massenstrom-Verhältnis $f = f(1) = f(2) = 1{,}43$ betrieben wird, kann der Anstieg der Temperaturdifferenz von $\Delta T_{klein}(1) = 0{,}9\ °C$ auf $\Delta T_{klein}(2) = 4{,}5\ °C$ am Produkt-Ausgang Ap und von $\Delta T_{groß}(1) = 5{,}6\ °C$ auf $\Delta T_{groß}(2) = 9{,}2\ °C$ am Produkt-Eingang $E_P$ nur durch die Änderung der Stärke des Belags zum Einen und zum Anderen durch den Anstieg der Belagdicke zum Produkt-Eingang $E_P$ hin und damit im Wesentlichen durch die Änderung der Wärmedurchgangszahl k in Abhängigkeit vom Wärmeaustauschweg $I_x$ und von der Betriebszeit erklärt werden.

Bei der gegenwärtigen Betriebsweise der Wärmeaustauschereinheit 22 sind zusammengefasst folgende Nachteile festzustellen:

- Nach Anfahren der saubereren Wärmeaustauschereinheit 22 und dem Einstellen einer stationären Produkt-Eintrittstemperatur $T_{PE}$ und einer stationären Produkt-Austrittstemperatur $T_{PA}$ ist nicht erkennbar, ob letztere bereits vor dem Produkt-Austritt $A_P$ erreicht ist und damit die Wärmeaustauschereinheit 22 optimal betrieben wird.
- Für den Fall, dass die Produkt-Austrittstemperatur $T_{PA}$ oder eine davon geringfügig abweichende bereits vor dem Produkt-Ausgang Ap, beispielsweise an der Stelle $I_x = I_{x1} < L$ erreicht wird, wirkt die verbleibende Strecke $L - I_{x1}$ als Heißhaltestrecke in der Wärmeaustauschereinheit 22, und das flüssige Produkt P erfährt dadurch bereits eine undefinierte und unerwünschte Verweilzeit, die sich nachteilig auf seine Qualität auswirken kann.
- Durch das hohe und über die gesamte Betriebszeit gleichbleibende Massenstromverhältnis $f = (f(1) = f(2) = $ konstant wird ein unwirtschaftlicher Betrieb, zumindest im ersten Teil der Betriebszeit, in Kauf genommen.
- Durch die signifikante Vergrößerung der Temperaturspreizung über den gesamten Wärmeaustauschweg L von $\Delta T_{klein}(1)$ auf $\Delta T_{groß}(1)$ (Faktor 6,2) am Anfang der Betriebszeit und bis zum Ende der Betriebszeit dann noch von $\Delta T_{klein}(2)$ auf $\Delta T_{groß}(2)$ (etwa Faktor 2) ergibt sich, über die gesamte Wärmeaustauschfläche A gesehen, durch das Produkt-Fouling insgesamt eine Beladungsmenge, die generell und besonders im Bereich des Produkt-Eingangs $E_P$ größer ist als sie wäre, wenn die vorstehende Vergrößerung der Temperaturdifferenzen, die grundsätzlich und tendenziell über die Betriebszeit hinweg hinzunehmen ist, geringer wäre.
- Die sich ansammelnde Beladungsmenge bestimmt die Standzeit der Wärmeaustauschereinheit 22 in der Hocherhitzerzone der Anordnung 10, d.h. die mögliche Betriebszeit als Zeit zwischen zwei erforderlichen Reinigungszyklen. Die bei der bisherigen Betriebsweise der Wärmeaustauschereinheit 22 beobachtete Belagbildung und die daraus resultierende Beladungsmenge nach Maß und Verteilung führt zu einer Reduzierung der Standzeit.

In der WO 2014/191062 A1 ist ein Verfahren zur Bestimmung des Grades der Wärmebehandlung eines flüssigen Produkts in einem Verarbeitungssystem für flüssige Produkte beschrieben, wobei sich dieses bekannte Verfahren vorzugsweise auf die Pasteurisierung dieser flüssigen Produkte im Temperaturbereich von 10 bis 100 °C bezieht und keinen Hinweis auf eine Übertragung auf eine Erhitzung oder Hocherhitzung in UHT-Verfahren enthält. Bei dem ermittelten Grad der Wärmebehandlung handelt es sich um einen sog. Wärmebehandlungsindexwert, vergleichbar mit sog. Pasteurisierungseinheiten, den der Fachmann aus einem für das jeweilige flüssige Produkt an sich bekannten mathematischen Zusammenhang, in den die dem flüssigen Produkt im Laufe seiner Wärmebehandlung in bestimmten Zeitabschnitten aufgeprägten Temperaturen eingehen, bestimmen kann. Es ist Aufgabe der vorliegenden Erfindung, ein Verfahren der gattungsgemäßen Art, eine Anordnung zur Durchführung des Verfahrens sowie eine Wärmeaustauschereinheit für diese Anordnung zu schaffen, die bei der Behandlung von flüssigen Produkten, insbesondere temperatursensiblen Lebensmittelprodukten der eingangs genannten Art, das Produkt-Fouling in den dem Produkt-Eingang der Wärmeaustauschereinheit benachbarten Bereichen und darüber hinaus insgesamt vermindern und damit die Standzeit der Wärmeaustauschereinheit deutlich verlängern.

ZUSAMMENFASSUNG DER ERFINDUNG

Diese Aufgabe wird durch ein Verfahren mit den Merkmalen der Nebenansprüche 1 oder 2 gelöst. Vorteilhafte Ausgestaltungen des erfindungsgemäßen Verfahrens sind Gegenstand der zugeordneten Unteransprüche. Eine Anordnung zur Durchführung des Verfahrens ist Gegenstand des nebengeordneten Anspruchs 7. Vorteilhafte Ausführungsformen der erfindungsgemäßen Anordnung sind in den zugeordneten Unteransprüchen beschrieben. Eine Wärmeaustauschereinheit für eine Anordnung nach Anspruch 7 ist Gegenstand des Anspruchs 10.

Die Erfindung geht verfahrenstechnisch aus von einem Verfahren entsprechend dem Oberbegriff der Ansprüche 1 und 2 zur aseptischen Erhitzung eines flüssigen Produkts, wie beispielsweise temperatursensible Lebensmittelprodukte, insbesondere Milchprodukte, Desserts oder dessertartige Produkte, mit der gesamten Bandbreite möglicher Viskositäten, in einer Wärmeaustauschereinheit der Erhitzer- oder Hocherhitzerzone einer Anordnung in einer UHT-Anlage. Der Produktstrom wird von einer Produkt-Eintrittstemperatur auf eine Produkt-Austrittstemperatur erhitzt und es werden dabei wenigstens die Produkt-Austrittstemperatur und die Heizmedium-Eintrittstemperatur überwacht und geregelt, wobei im Rahmen einer besonders sicheren Prozessführung auch die Produkt-Eintrittstemperatur überwacht und ggf. über ein der Wärmeaustauschereinheit vorgeordnetes Prozessaggregat geregelt wird.

Die der Erfindung zugrundeliegende Aufgabe wird nach einem ersten Verfahren gelöst, wenn bei dem Verfahren der gattungsgemäßen Art die nachstehenden Verfahrensschritte (A1), (B1), (C), (D1), (E) und (F) vorgesehen sind.

Die der Erfindung zugrundeliegende Aufgabe wird nach einem zweiten Verfahren gelöst, wenn bei dem Verfahren der gattungsgemäßen Art die folgenden Verfahrensschritte (A2), (B2), (C), (D2), (E) und (F) vorgesehen sind: Dabei besteht bei beiden Verfahren der erfinderische Grundgedanke darin, dass zur Lösung der gestellten Aufgabe die Sicherstellung eines optimalen produktspezifischen und optimalen heizmediumspezifischen Temperatur-Verlaufs über die gesamte Betriebszeit der Wärmeaustauschereinheit erforderlich ist und dies nur dann gelingen kann, wenn wenigstens Informationen über die Temperatur des Produktstroms, zumindest in einem Bereich oberstromig des Produkt-Ausganges, vorliegen, die eine geeignete Steuerung und Regelung des Heizmediumstromes ermöglichen. Mit diesen Informationen und den vorgeschlagenen Verfahrensschritten wird das Produkt-Fouling in der Wärmeaustauschereinheit insgesamt und vor allem in den dem Produkt-Ausgang benachbarten Bereichen vermindert.

Erstes Verfahren

(A1) Einstellen eines nicht bekannten produktspezifischen Temperatur-Verlaufs zwischen der Produkt-Eintrittstemperatur und der Produkt-Austrittstemperatur mit Hilfe einer Zufuhr des erforderlichen Heizmediumstroms mit der erforderlichen Heizmedium-Eintrittstemperatur an einem Heizmedium-Eingang in den Heizmediumraum. Dieses Einstellen wird durch Messen diskreter Produkt-Temperaturen an vorgegebenen Messstellen im Produktstrom begleitet, wobei zumindest die Produkt-Austrittstemperatur und in der Regel auch die Produkt-Eintrittstemperatur über weitere vorgegebene Messstellen erfasst werden. Der sich aus diesen Messungen ergebende produktspezifische Temperatur-Verlauf wird zur Weiterverarbeitung gemäß Verfahrensschritt (D1) bereitgestellt.

Der Verfahrensschritt (A1) kommt zur Anwendung, wenn noch keine hinreichenden Erfahrungswerte für das flüssige Produkt vorliegen und lediglich die Endpunkte des Temperaturverlaufs, nämlich die Produkt-Eintrittstemperatur und die Produkt-Austrittstemperatur, notwendigerweise vorgegeben sind. Der Verfahrensschritt Zufuhr des Heizmediumstromes mit der Heizmedium-Eintrittstemperatur ist so zu verstehen, dass zunächst Minimalwerte sowohl für die Heizmedium-Eintrittstemperatur als auch für den Heizmediumstrom gewählt werden, mit denen das Erreichen und das Halten der Produkt-Austrittstemperatur und der Produkt-Eintrittstemperatur gerade sichergestellt ist. Es wird demzufolge nicht, wie bisher, mit einem aus Sicherheitsgründen über die gesamte Betriebszeit hohen Massenstromverhältnis (= Heizmediumstrom/Produktstrom) gefahren, das in dieser Höhe für das Ende der Betriebszeit hinreichend ist, sondern mit einem deutlich kleineren.

(B1) Vorgeben der Produkt-Eintrittstemperatur an einem Produkt-Eingang in den und der Produkt-Austrittstemperatur an einem Produkt-Ausgang aus dem Produktraum und Bereitstellen der Heizmedium-Eintrittstemperatur und des Heizmediumstroms.

Die Verfahrensschritte Vorgeben und Bereitstellen sind so zu verstehen, dass diese quantitativen Anweisungen in Verbindung mit den notwendigen Steuerungsalgorithmen in einer Steuerungs- und Regelungseinheit hinterlegt sind.

(C) Messen eines produktspezifischen Temperatur-Verlaufs zwischen dem Produkt-Ausgang und dem Produkt-Eingang an den vorgegebenen Messstellen.

Dieser Verfahrensschritt ist so zu verstehen, dass im Verlauf der Betriebszeit, wenn die Belagbildung fortschreitet, und zwar nach dem Einstellen des nicht bekannten produktspezifischen Temperatur-Verlaufs nach Verfahrensschritt (A1), der jeweils vorliegende produktspezifische Temperatur-Verlauf gemessen und zur Weiterverarbeitung gemäß dem nachfolgenden Verfahrensschritt (D1) bereitgestellt wird.

(D1) Vergleichen der Temperaturverläufe der Verfahrensschritte (A1) und (C) und Berechnen jeweiliger Temperatur-Abweichungen an den vorgegebenen Messstellen.

Dieser Verfahrensschritt liefert infolge des aufwachsenden Belags ggf. Veränderungen des produktspezifischen Temperaturverlaufs nach oben oder unten, die sich durch die ermittelte jeweilige Temperatur-Abweichung ausdrückt, wobei ein "Durchsacken" der Produkt-Austrittstemperatur um beispielsweise 3 °C bedeuten kann, dass das flüssige Produkt die Wärmeaustauschereinheit nicht mehr aseptisch verlässt. Die ermittelte Temperatur-Abweichung kann positiv oder negativ sein.

(E) Vorgeben einer zulässigen Temperatur-Abweichung.

Diese Vorgabe ist vom flüssigen Produkt und von der jeweiligen Rezeptur abhängig und wird in der Steuerungs- und Regelungseinheit zur Weiterverarbeitung hinterlegt. Sie ist, wegen der möglichen positiven oder der negativen Temperatur-Abweichung, positiv und negativ, und ggf. betragsmäßig unterschiedlich.

(F) Verändern der Heizmedium-Eintrittstemperatur auf eine Soll-Heizmedium-Eintrittstemperatur bei Überschreiten der zulässigen Temperatur-Abweichung durch die berechnete Temperatur-Abweichung.

Der Verfahrensschritt Verändern ist so zu verstehen, dass bei Überschreiten der zulässigen Temperatur-Abweichung nach oben oder unten in der Steuerungs- und Regelungseinheit eine Vorschrift bzw. ein Algorithmus hinterlegt ist, nach dem zunächst nur die Soll-Heizmedium-Eintrittstemperatur geändert wird, mit der das produktspezifische Temperaturprofil in den Bereich der zulässigen Temperatur-Abweichung zurückgeführt wird. Es werden zweckmäßig die einander entsprechenden Beträge der infrage kommenden Abweichungen miteinander verglichen.

## Zweites Verfahren

Bei dem erfindungsgemäßen zweiten Verfahren kann sich die Erörterung auf die Verfahrensschritte (A2) und (B2) beschränken, da die weiteren Verfahrensschritte (C), (D2), (E) und (F) mit den entsprechenden Verfahrensschritten (C), (D1), (E) und (F) inhaltlich identisch sind:

(A2) Einstellen eines bekannten produktspezifischen Soll-Temperatur-Verlaufs mit Hilfe des Messens diskreter Produkt-Temperaturen an vorgegebenen Messstellen im Produktstrom und mit Hilfe einer Zufuhr des erforderlichen Heizmediumstroms mit der erforderlichen Heizmedium-Eintrittstemperatur an einem Heizmedium-Eingang in den Heizmediumraum.

Dieser Verfahrensschritt Einstellen ist so zu verstehen, dass ein in der Steuerungs- und Regelungseinheit hinterlegter, bekannter produktspezifischen Soll-Temperatur-Verlauf mit Hilfe des Messens diskreter Produkt-Temperaturen an vorgegebenen Messstellen im Produktstrom gesteuert und justiert wird, wobei zumindest die Produkt-Austrittstemperatur und in der Regel auch die Produkt-Eintrittstemperatur über weitere vorgegebenen Messstellen erfasst werden. Dieser eingestellte und vermessene und weitestgehend dem vorgegebenen bekannten produktspezifischen Temperatur-Verlauf entsprechende Temperaturverlauf wird zur Weiterverarbeitung gemäß Verfahrensschritt (D2) bereitgestellt.

Der Verfahrensschritt kommt zur Anwendung, wenn hinreichenden Erfahrungswerte für das zu erhitzende flüssige Produkt aus früheren Erhitzungsprozessen vorliegen und damit ein realisierbarer produktspezifischer Soll-Temperatur-Verlauf vorliegt, der die notwendigerweise vorzugebenden Endpunkte des Temperaturverlaufs, nämlich die Produkt-Eintrittstemperatur und die Produkt-Austrittstemperatur, einschließt.

Der Verfahrensschritt Zufuhr des Heizmediumstromes mit der Heizmedium-Eintrittstemperatur ist so zu verstehen, dass diese Betriebsdaten bekannt sind und bereitgehalten werden, mit denen das Erreichen und das Halten des bekannten produktspezifischen Soll-Temperatur-Verlaufs sichergestellt ist. Es wird demzufolge nicht, wie bisher, mit einem aus Sicherheitsgründen über die gesamte Betriebszeit hohen Massenstromverhältnis gefahren, sondern diese Betriebsdaten sind zumindest für den Anfang der Betriebszeit im Sinne der erfindungsgemäßen Aufgabenstellung minimiert bzw. optimiert.

(B2) Vorgeben des bekannten produktspezifischen Soll-Temperatur-Verlaufs, der die Produkt-Eintrittstemperatur an einem Produkt-Eingang in den und die Produkt-Austrittstemperatur an einem Produkt-Ausgang aus dem Produktraum einschließt, und Bereitstellen einer hinterlegten Zufuhr des Heizmediumstroms mit der Heizmedium-Eintrittstemperatur.

Die Verfahrensschritte Vorgeben und Bereitstellen sind so zu verstehen, dass diese quantitativen Anweisungen in Verbindung mit den notwendigen Steuerungsalgorithmen in der Steuerungs- und Regelungseinheit hinterlegt sind.

Durch den Aufwuchs des Belages muss die Heizmedium-Eintrittstemperatur, über die Betriebszeit gesehen, verändert, d.h. angehoben werden, um den sich verschlechternden Wärmedurchgang zu kompensieren. Dies wird gemäß einem Vorschlag dadurch erreicht, dass das Verändern der Heizmedium-Eintrittstemperatur auf die jeweils erforderliche Soll-Heizmedium-Eintrittstemperatur entweder in Temperaturstufen, die vorzugsweise sehr klein ausgeführt sein können, oder durch eine stetige Temperaturänderung erfolgt. In beiden Fällen kann eine sehr feinfühlige Temperaturregelung realisiert werden.

Das Anheben der Heizmedium-Eintrittstemperatur findet seine Grenze einerseits durch die in der Prozessanlage vorhandenen Möglichkeiten, diese Temperaturen darzustellen, und andererseits durch Wirtschaftlichkeitsüberlegungen. Eine weitere Begrenzung der Heizmedium-Eintrittstemperatur ist durch Geschwindigkeit des Temperaturanstieges, d.h. durch die Temperaturänderung in einer vorgegebenen Zeitspanne, gegeben. Dieser Temperatur-Gradient, beispielsweis in Grad Celsius/Stunde (°C/h), liefert einen Hinweis auf die Aufwuchsgeschwindigkeit des Belages und damit auf die verfügbare Standzeit der Wärmeaustauschereinheit.

Eine weitere Ausgestaltung des Verfahrens, die sowohl auf das erste als auch auf das zweite Verfahren gleichermaßen Anwendung findet, sieht folgende Verfahrensschritte vor:

(G) Ermitteln eines zeitlichen Temperatur-Gradienten aus einer Änderung der Heizmedium-Eintrittstemperatur in einer vorgegebenen Zeitspanne.
(H) Vorgeben eines Referenz-Gradienten für einen zulässigen Temperaturanstieg der Heizmedium-Eintrittstemperatur in der Zeitspanne.
(I) Vergleichen der Ergebnisse des Verfahrensschrittes (G) mit der Vorgabe nach Verfahrensschritt (H).
(J) Verändern des Heizmediumstroms auf einen Soll-Heizmediumstrom bei Überschreiten des Referenz-Gradienten durch den ermittelten zeitlichen Temperatur-Gradienten.

Da das erste und das zweite Verfahren mit einem gerade notwendigen Massenstrorriverhältnis zu Beginn der Betriebszeit gestartet wird, bestehen im Rahmen der Ressourcen der Prozessanlage und der gebotenen Wirtschaftlichkeit noch bis zum Ende der Betriebszeit signifikante mengenbezogene Steigerungen beim Heizmediumstrom, die etwa dort ihre Grenze finden, wo das bekannte Verfahren aus Sicherheitsüberlegungen heraus am Anfang der Betriebszeit startet.

Mit Blick auf die Veränderung des Heizmediumstroms sieht eine Ausgestaltung des Verfahrens vor, dass das Verändern des Heizmediumstroms auf den jeweils erforderlichen Soll-Heizmediumstrom entweder durch eine stufenweise oder eine stetige Erhöhung erfolgt. In beiden Fällen kann dadurch, bei entsprechender Auslegung, einerseits eine feinfühlige Regelung der Medium-Eintrittstemperatur unterstützt und andererseits erreicht werden, dass eine Temperaturspreizung zwischen Produkt- und Heizmedium-Temperatur in Richtung zum Produkt-Eingang bzw. zum Heizmedium-Ausgang hin auf das gerade notwendige Maß beschränkt wird. Diese Maßnahme sorgt dafür, dass die durch die Temperaturspreizung forcierte Neigung zur verstärkten Belagbildung minimiert wird.

Ein Hinweis auf den fortschreitenden Aufwuchs des Belages wird durch eine andere Ausgestaltung des Verfahrens zusätzlich dadurch gegeben, dass am Produkt-Eingang ein Produkt-Eintrittsdruck und am Produkt-Ausgang ein Produkt-Austrittsdruck gemessen werden.

Eine erfindungsgemäße Anordnung zur Durchführung des erfindungsgemäßen Verfahrens geht aus von einer bekannten UHT-Anlage gemäß dem Oberbegriff des Anspruchs 7.

Erfindungsgemäß ist vorgesehen, ausgehend von der vorstehend angegebenen bekannten Anordnung, dass im Produktraum der Wärmeaustauschereinheit, oberstromig eines Produkt-Ausgangs und diesem im definierten Abstand benachbart, wenigstens eine Temperatur-Messstelle vorgesehen ist, die über eine jeweils zugeordnete Messeinrichtung für diskrete Produkt-Temperatur zur Messung diskreter Produkt-Temperaturen mit der Steuerungs- und Regelungseinheit verbunden ist. Mit dieser wenigstens einen Temperatur-Messstelle werden Informationen über den produktspezifischen Temperatur-Verlauf innerhalb des Produktraumes, und zwar in einem dem Produkt-Ausgang benachbarten Bereich, gewonnen. Dieser Bereich besitzt in jedem Falle einen definierten Abstand vom Produkt-Ausgang; vorzugsweise ist dieser Abstand dem Produkt-Ausgang unmittelbar benachbart.

Der produktspezifische Temperatur-Verlauf wird in dem in Rede stehenden Bereich nach einem Vorschlag umso exakter erfasst, wenn mehr als eine Temperatur-Messstelle vorgesehen ist. In diesem Falle sind diese Temperatur-Messstellen, entgegen der Strömungsrichtung des flüssigen Produkts, in Reihe zueinander und voneinander definiert beabstandet angeordnet.

Es hat sich gezeigt, dass es hinreichend ist, wenn die wenigstens eine Temperatur-Messstelle wenigstens im letzten Drittel des durchströmten Produktraumes angeordnet ist/sind. Dadurch kann dieser Bereich detektiert werden, aus dem erkennbar ist, ob die Wärmeaustauschfläche der Wärmeaustauschereinheit optimal und damit wirtschaftlich ausgenutzt und ob die Qualität des flüssigen Produkts durch eine in diesem Bereich bereits stattfindende Heißhaltung mit undefinierter Verweilzeit gefährdet ist.

Eine erfindungsgemäße Wärmeaustauschereinheit, die für eine aseptische Erhitzung in einer Erhitzerzone einer Anordnung in einer UHT-Anlage im Sinne der erfindungsgemäßen Aufgabenstellung geeignet ist, wird in Anspruch 10 angegeben. Sie ist in mehrere in Reihe miteinander geschaltete Sektionen unterteilt. Dabei sind benachbarte Sektionen produktseitig jeweils über ein vom flüssigen Produkt durchströmtes erstes Verbindungsglied und heizmediumseitig über ein zweites Verbindungglied miteinander verbunden. Im ersten Verbindungsglied ist die jeweilige Temperatur-Messstelle vorgesehen. Durch den sektionsweisen Aufbau der Wärmeaustauschereinheit ist ein denkbar einfacher Zugang zu dem in Rede stehenden Bereich des Wärme aufnehmenden Produktraumes oberstromig des Produkt-Ausganges möglich. Eine sehr einfache Anordnung einer Temperatur-Messstelle ist in jedem dieser dem Bereich zugeordneten ersten Verbindungsglieder gegeben, ohne dass dabei auf komplizierte Weise in den Produktraum, in dem sich der Wärmeaustausch vollzieht, selbst eingegriffen werden muss.

Besonders einfach und zielführend gestalten sich erfindungsgemäß die vorstehenden Maßnahmen, weil die Wärmeaustauschereinheit als Rohr-Wärmeaustauscher ausgeführt ist und die einzelne Sektion des Rohr-Wärmeaustauschers produktseitig jeweils als ein vom flüssigen Produkt durchströmtes Monorohr oder als ein Rohrbündel mit einer Anzahl von vom flüssigen Produkt parallel durchströmten Innenrohren ausgebildet ist. Dabei ist das erste Verbindungsglied vorzugsweise jeweils als Verbindungsbogen oder als Verbindungsarmatur ausgebildet.

KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausgestaltungen eines ersten und eines zweiten Verfahrens der gattungsgemäßen Art, den verschiedensten Ausführungsformen einer Anordnung zur Durchführung des Verfahrens und den verschiedensten Ausführungsformen einer Wärmeaustauschereinheit für eine solche Anordnung realisiert ist, werden nachfolgend anhand der Zeichnung die beiden Verfahren, ein bevorzugtes Ausführungsbeispiel einer erfindungsgemäßen Anordnung, die eine erfindungsgemäße Wärmeaustauschereinheit aufnimmt, und zwei vorteilhafte Ausführungsformen der Wärmeaustauschereinheit beschrieben. Es zeigen

| | |
|---|---|
| **Figur 3** | ein Flussdiagramm eines ersten und eines zweiten Verfahrens; |
| **Figur 4** | in schematischer Darstellung eine Anordnung mit einer Wärmeaustauschereinheit zur Durchführung der beiden Verfahren gemäß **Figur 3**; |
| **Figur 5** | ein Diagramm zur Darstellung der Temperaturverläufe in der Wärmeaustauschereinheit gemäß **Figur 4**; |
| **Figur 6** | die Vorderansicht einer bevorzugten Ausführungsform der Wärmeaustauschereinheit gemäß **Figur 4**; |
| **Figur 6a** | in schematischer und vergrößerter Darstellung ein erstes Ausführungsbeispiel der Wärmeaustauschereinheit gemäß **Figur 6** anhand einer dort mit "Z" gekennzeichneten Einzelheit in Bezug auf die Ausformung des Wärme aufnehmenden Produktraumes und |
| **Figur 6b** | in schematischer und vergrößerter Darstellung ein zweites Ausführungsbeispiel der Wärmeaustauschereinheit gemäß **Figur 6** anhand einer dort mit "Z" gekennzeichneten Einzelheit in Bezug auf die Ausformung des Wärme aufnehmenden Produktraumes. |

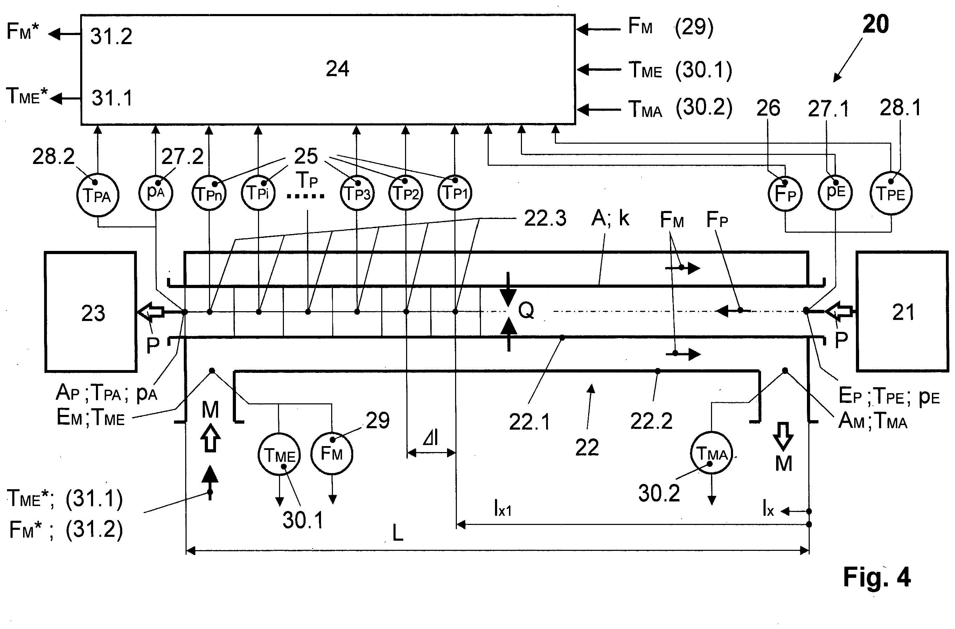

Eine erfindungsgemäße Anordnung 20 (**Figur 4**), die einen Ausschnitt aus einer UHT-Anlage darstellt, ist in ihrem Grundaufbau weitestgehend identisch mit der vorstehend bereits beschriebenen Anordnung 10 nach dem Stand der Technik **(Figur 1)**. Auf eine diesbezügliche neuerliche Beschreibung wird daher verzichtet. Der Unterschied zwischen der bekannten Anordnung 10 und der erfindungsgemäßen Anordnung 20 besteht darin, dass im Produktraum 22.1 der Wärmeaustauschereinheit 22, oberstromig des Produkt-Ausgangs $A_P$ und diesem benachbart, wenigstens eine Temperatur-Messstelle 22.3 vorgesehen ist. Die wenigstens eine Temperatur-Messstelle 22.3 besitzt im Ausführungsbeispiel einen Abstand vom Produkt-Eingang $E_P$, der mit einem diskreten Wärmeaustauschweg $I_{x1}$ bezeichnet ist, und somit vom Produkt-Ausgang $A_P$ nach Maßgabe eines gesamten Wärmeaustauschweges L einen definierten Abstand $L-I_{x1}$ besitzt. Die Temperatur-Messstellen 22.3 sind, entgegen der Strömungsrichtung des flüssigen Produkts P, in Reihe zueinander und voneinander in einem definierten Messstellenabstand $\Delta I$ beabstandet angeordnet. Jede dieser Messstellen 22.3 ist über eine jeweils zugeordnete Messeinrichtung für diskrete Produkt-Temperatur 25 zur Messung diskreter Produkt-Temperaturen $T_P$ bzw. $T_{P1}$ bis $T_{Pn}$ mit der Steuerungs- und Regelungseinheit 24 verbunden. Darüber hinaus ist vorgesehen, dass eine Messeinrichtung für Produkt-Eintrittsdruck 27.1 einen Produkt-Eintrittsdruck $p_E$ und eine Messeinrichtung für Produkt-Austrittsdruck 27.2 einen Produkt-Austrittsdruck $p_A$ misst. Eine nicht notwendigerweise vorzusehende Messeinrichtung für Heizmedium-Austrittstemperatur 30.2 misst die Heizmedium-Austrittstemperatur $T_{MA}$.

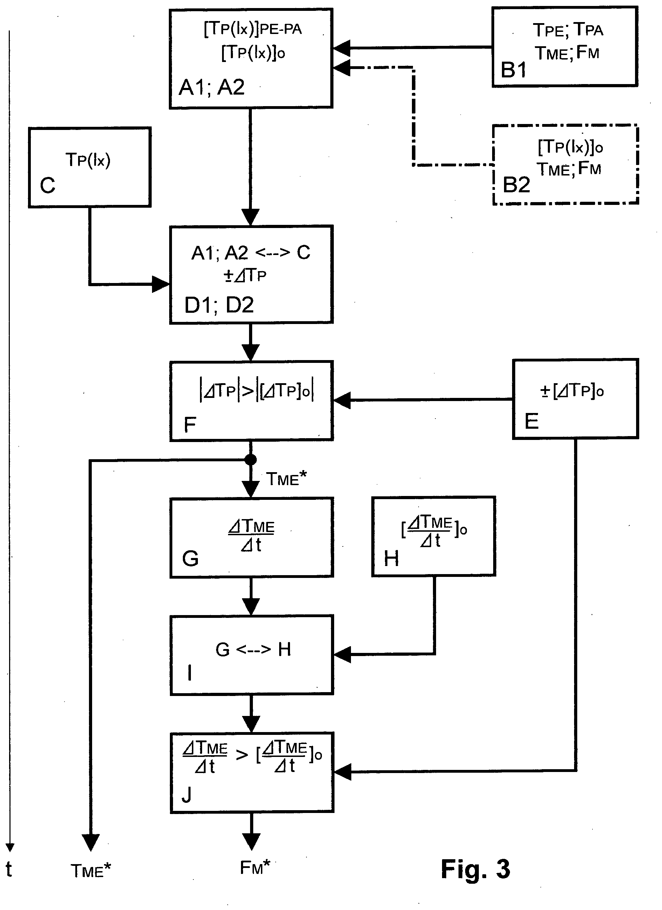

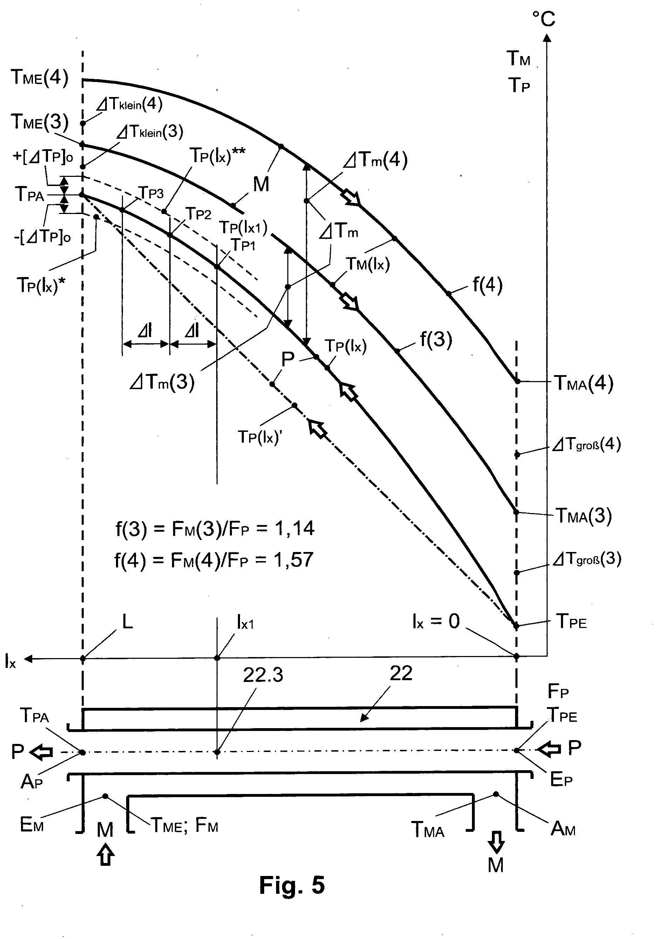

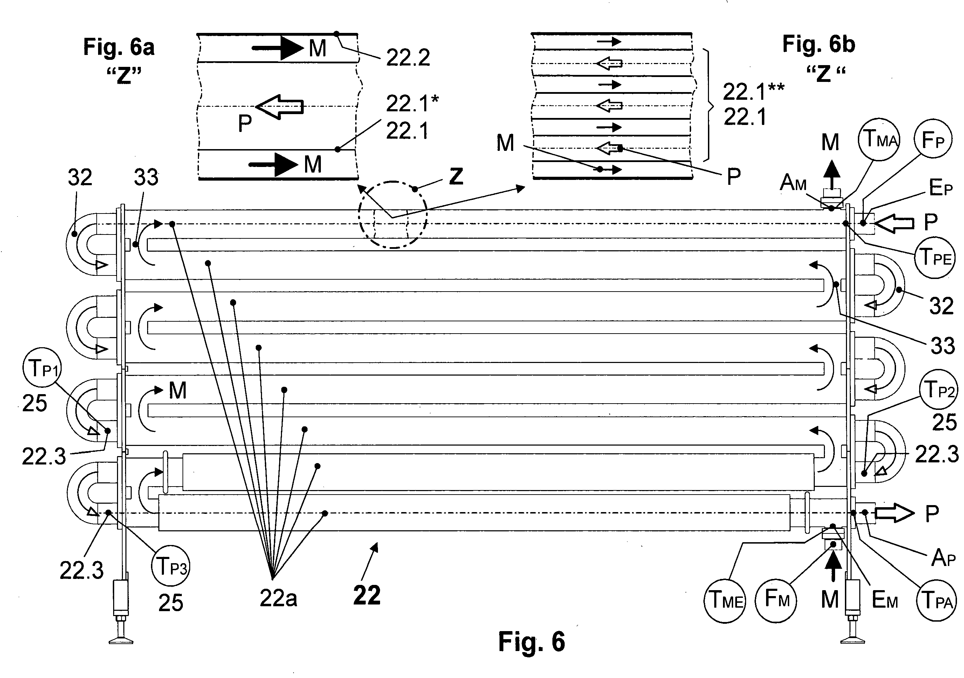

Die in **Figur 2** (Stand der Technik) enthaltenen Merkmale und Bezugsgrößen, die vorstehend definiert und erläutert wurden, finden sich auch identisch oder in lediglich bezeichnungsmäßig modifizierter Form teilweise in **Figur 3** und überwiegend in den **Figuren 5** und **6** wieder. Auch diesbezüglich wird nachfolgend auf eine neuerliche Definition und Erläuterung verzichtet. In Bezug auf den Erfindungsgegenstand werden nur die zusätzlichen Merkmale und Bezugsgrößen eingeführt und erläutert.

In **Figur 3** sind das erste und das zweite erfindungsgemäße Verfahren, jeweils in Verbindung mit einer für beide Verfahren vorteilhaften weiteren Ausgestaltung, in Form eines Flussdiagramms über der nach unten aufgetragenen Zeit t (vertikale Achse) veranschaulicht.

Erstes Verfahren

Das erste Verfahren geht aus von dem bekannten Verfahren zur aseptischen Erhitzung eines flüssigen Produkts P in einer Wärmeaustauschereinheit 22 der Erhitzerzone einer Anordnung 20 in einer UHT-Anlage, bei dem in der Wärmeaustauschereinheit 22 zwischen dem flüssigen Produkt P und einem Heizmedium M ein indirekter Wärmeaustausch an einer Wand dadurch stattfindet, dass ein in einem Wärme abgebenden Heizmediumraum 22.2 strömender Heizmediumstrom $F_M$ im Gegenstrom zu einem in einem Wärme aufnehmenden Produktraum 22.1 strömenden Produktstrom $F_P$ geführt wird, bei dem der Produktstrom $F_P$ von einer Produkt-Eintrittstemperatur $T_{PE}$ auf eine Produkt-Austrittstemperatur $T_{PA}$ erhitzt wird und bei dem wenigstens die Produkt-Austrittstemperatur $T_{PA}$ und die Heizmedium-Eintrittstemperatur $T_{ME}$ überwacht und geregelt werden,

Das erste Verfahren ist durch folgende Verfahrensschritte (A1), (B1), (C), (D1), (E) und (F) gekennzeichnet, die in ihrem Bedingungszusammenhang und ihrer Bedeutung in **Figur 3** grafisch veranschaulicht sind:

(A1) Einstellen eines nicht bekannten produktspezifischen Temperatur-Verlaufs $[T_P(I_x)]_{PE-PA}$ zwischen der Produkt-Eintrittstemperatur $T_{PE}$ und der Produkt-Austrittstemperatur $T_{PA}$ mit Hilfe einer Zufuhr des erforderlichen Heizmediumstroms $F_M$ mit der erforderlichen Heizmedium-Eintrittstemperatur $T_{ME}$ an einem Heizmedium-Eingang $E_M$ in den Heizmediumraum 22.2 und Messen diskreter Produkt-Temperaturen $T_P$ bzw. $T_{P1}$ bis $T_{Pn}$ an vorgegebenen Messstellen 22.3 im Produktstrom $F_P$.

(B1) Vorgeben der Produkt-Eintrittstemperatur $T_{PE}$ an einem Produkt-Eingang Ep in den und der Produkt-Austrittstemperatur $T_{PA}$ an einem Produkt-Ausgang $A_P$ aus dem Produktraum 22.1 und Bereitstellen der Heizmedium-Eintrittstemperatur $T_{ME}$ und des Heizmediumstroms $F_M$.

(C) Messen eines produktspezifischen Temperatur-Verlaufs $T_P(I_x)$ zwischen dem Produkt-Ausgang $A_P$ und dem Produkt-Eingang $E_P$ an den vorgegebenen Messstellen 22.3.

(D1) Vergleichen der Temperaturverläufe der Verfahrensschritte (A1) und (C) und Berechnen jeweiliger Temperatur-Abweichungen $\Delta T_P$ an den vorgegebenen Messstellen 22.3.

(E) Vorgeben einer zulässigen Temperatur-Abweichung $[\Delta T_P]_o$.

(F) Verändern der Heizmedium-Eintrittstemperatur $T_{ME}$ auf eine Soll-Heizmedium-Eintrittstemperatur $T_{ME}^*$ bei Überschreiten der zulässigen Temperatur-Abweichung $[\Delta T_P]_o$ durch die berechnete Temperatur-Abweichung $\Delta T_P$.

Zweites Verfahren

Das zweite Verfahren geht ebenfalls aus von dem vorbeschriebenen bekannten Verfahren und ist durch folgende Verfahrensschritte (A2), (B2), (C), (D2), (E) und (F) gekennzeichnet, wobei die Verfahrensschritte (C), (E) und (F) mit den gleichnamigen Verfahrensschritten des ersten Verfahrens identisch sind. Auch die Verfahrensschritte des zweiten Verfahrens sind in ihrem Bedingungszusammenhang und ihrer Bedeutung ebenfalls in **Figur 3** grafisch veranschaulicht:

(A2) Einstellen eines bekannten produktspezifischen Soll-Temperatur-Verlaufs $[T_P(I_x)]_o$ mit Hilfe des Messens diskreter Produkt-Temperaturen $T_P$ bzw. $T_{P1}$ bis $T_{Pn}$ an vorgegebenen Messstellen 22.3 im Produktstrom $F_P$ und mit Hilfe einer Zufuhr des erforderlichen Heizmediumstroms $F_M$ mit der erforderlichen Heizmedium-Eintrittstemperatur $T_{ME}$ an einem Heizmedium-Eingang $E_M$ in den Heizmediumraum 22.2.

(B2) Vorgeben des produktspezifischen Soll-Temperatur-Verlaufs $U_P(I_x)]_o$, der die Produkt-Eintrittstemperatur $T_{PE}$ an einem Produkt-Eingang $E_P$ in den und die Produkt-Austrittstemperatur $T_{PA}$ an einem Produkt-Ausgang $A_P$ aus dem Produktraum 22.1 einschließt, und Bereitstellen einer hinterlegten Zufuhr des Heizmediumstroms $F_M$ mit einer Heizmedium-Eintrittstemperatur $T_{ME}$.

(C) Messen eines produktspezifischen Temperatur-Verlaufs $T_P(I_x)$ zwischen dem Produkt-Ausgang $A_P$ und dem Produkt-Eingang $E_P$ an den vorgegebenen Messstellen 22.3.

(D2) Vergleichen der Temperaturverläufe der Verfahrensschritte (A2) und (C) und Berechnen jeweiliger Temperatur-Abweichungen $\Delta T_P$ an den vorgegebenen Messstellen 22.3.

(E) Vorgeben einer zulässigen Temperatur-Abweichung $[\Delta T_P]_o$.

(F) Verändern der Heizmedium-Eintrittstemperatur $T_{ME}$ auf eine Soll-Heizmedium-Eintrittstemperatur $T_{ME}^*$ bei Überschreiten der zulässigen Temperatur-Abweichung $[\Delta T_P]_o$ durch die berechnete Temperatur-Abweichung $\Delta T_P$.

Sowohl das erste als auch das zweite Verfahren können vorteilhaft jeweils mit weiteren Verfahrensschritten (G), (H), (I) und (J) ausgestaltet werden, die ebenfalls in ihrem Bedingungszusammenhang und ihrer Bedeutung in **Figur 3** grafisch veranschaulicht sind:

(G) Ermitteln eines zeitlichen Temperatur-Gradienten $\Delta T_{ME}/\Delta t$ aus einer Änderung der Heizmedium-Eintrittstemperatur $T_{ME}$ in einer vorgegebenen Zeitspanne $\Delta t$.

(H) Vorgeben eines Referenz-Gradienten $[\Delta T_{ME}/\Delta t]_o$ für einen zulässigen Temperaturanstieg der Heizmedium-Eintrittstemperatur $T_{ME}$ in der Zeitspanne $\Delta t$.

(I) Vergleichen der Ergebnisse des Verfahrensschrittes (G) mit der Vorgabe nach Verfahrensschritt (H).

(J) Verändern des Heizmediumstroms $F_M$ auf einen Soll-Heizmediumstrom $F_M^*$ bei Überschreiten des Referenz-Gradienten $[\Delta T_{ME}/\Delta t]_o$ durch den ermittelten zeitlichen Temperatur-Gradienten $\Delta T_{ME}/\Delta t$.

Analog zur Darstellung in **Figur 2** werden über die Betriebszeit der Wärmeaustauschereinheit 22 die in **Figur 5** dargestellten Temperatur-Verläufe $T_P(I_x)$ und $T_M(I_x)$, aufgetragen über dem variablen Wärmeaustauschweg $I_x$, beobachtet. Mit $T_P(I_x)$ ist wiederum der produktspezifische Temperatur-Verlauf im zu behandelnden und vorgegebenen und Wärme aufnehmenden Produktstrom $F_P$ zwischen der durch die vorgeordnete Prozesseinheit 21 bereitgestellten Produkt-Eintrittstemperatur $T_{PE}$ (z.B. 125 °C) und der zur Sicherstellung einer hinreichenden aseptischen Erhitzung notwendigen Produkt-Austrittstemperatur $T_{PA}$ (z.B. 140 °C) bezeichnet. Mit $T_M(I_x)$ sind zwei heizmediumspezifische Temperatur-Verläufe im Wärme abgebenden Heizmediumstrom $F_M$ gekennzeichnet. Der, bezogen auf die Zeichnungslage, untere Temperaturverlauf zwischen einer dritten Heizmedium-Eintrittstemperatur $T_{ME}(3)$ (z.B. 141,7 °C) und einer dritten Heizmedium-Austrittstemperatur $T_{MA}(3)$ (z.B. 128,8 °C) liegt zu Beginn der Betriebszeit vor, wenn die Wärmeaustauschereinheit 22 produktseitig noch frei von jeglichen Ablagerungen (Produkt-Fouling) ist.

Am Ende der Betriebszeit, nach beispielsweise 12 Stunden, hat die Steuerungs- und Regelungseinheit 24 die Heizmedium-Eintrittstemperatur $T_{ME}$ so weit angehoben, dass nunmehr am Heizmedium-Eingang $E_M$ eine vierte Heizmedium-Eintrittstemperatur $T_{ME}(4)$ (z.B. 144 °C) notwendig ist. Die sich zu Beginn der Betriebszeit am Heizmedium-Ausgang $A_M$ zwangsläufig einstellende dritte Heizmedium-Austrittstemperatur $T_{MA}(3)$ ist im Wesentlichen abhängig von einem dritten Massenstromverhältnis f(3), gebildet als Quotient aus einem dritten Heizmediumstrom $F_M(3)$ und dem Produktstrom $F_P$ einerseits (f(3) = $F_M(3)/F_P$ = 1,14) und den weiteren vorstehend im Zusammenhang mit **Figur 2** genannten Einflussgrößen.

Eine sich am Ende der Betriebszeit am Heizmedium-Ausgang $A_M$ zwangsläufig einstellende vierte Heizmedium-Austrittstemperatur $T_{MA}(4)$ (z.B. 134,6 °C) ist im Wesentlichen abhängig von einem vierten Massenstromverhältnis f(4), gebildet als Quotient aus einem vierten Heizmediumstrom $F_M(4)$ und dem Produktstrom $F_P$ einerseits (f(4) = $F_M(4)/F_P$ = 1,57) und den weiteren vorstehend im Zusammenhang mit **Figur 2** genannten Einflussgrößen.

Die Erfindung sieht vor, dass zu Beginn der Betriebszeit die Wärmeaustauschereinheit 22 mit einem Minimalwert für den dritten Heizmediumstrom $F_M(3)$ gefahren wird, mit dem in Verbindung mit einem Minimalwert für die dritte Heizmedium-Eintrittstemperatur $T_{ME}(3)$ das Erreichen und das Halten der Produkt-Austrittstemperatur $T_{PA}$ und der Produkt-Eintrittstemperatur $T_{PE}$ sichergestellt ist.

Im Rahmen der Steigerung der Heizmedium-Eintrittstemperatur von $T_{ME}(3)$ auf $T_{ME}(4)$ wird, im Gegensatz zum bekannten Verfahren, der Heizmediumstrom $F_M$ von dem Minimalwert $F_M(3)$ auf den Maximalwert $F_M(4)$ schrittweise oder stufenlos angehoben. Im Ergebnis ergibt sich dadurch eine deutlich geringere Temperaturspreizung zwischen der Produkt-Temperatur Tp und der Heizmedium-Temperatur $T_M$ zum Produkt-Eingang $E_P$ bzw. Heizmedium-Ausgang $A_M$ hin als beim bekannten Verfahren. Die diesbezüglichen Vorteile hinsichtlich eines geringeren Aufwuchses zum Produkt-Eingang $E_P$ hin wurden vorstehend im Zusammenhang mit **Figur 2** bereits beschrieben.

Die über die Betriebszeit aufgewachsene Belegung mit Produkt-Fouling erkennt der Fachmann, wie vorstehend ebenfalls dargelegt, an der mittleren logarithmischen Temperaturdifferenz $\Delta T_m$. Im vorliegenden Falle ergibt sich erfindungsgemäß zu Beginn der Betriebszeit eine dritte mittlere logarithmische Temperaturdifferenz $\Delta T_m(3)$ = 2,6 °C und zum Ende der Betriebszeit eine vierte mittlere logarithmische Temperaturdifferenz $\Delta T_m(4)$ = 6,4 °C. Insoweit entsprechen diese Werte etwa jenen beim Verfahren nach dem Stand der Technik.

Aus den Gleichungen (2.1) und (2.2) mit entsprechend abgewandelten Größen resultierend ergibt sich im Unterschied zum bekannten Verfahren durch die signifikante Verringerung der Temperaturspreizung über den gesamten Wärmeaustauschweg L von $\Delta T_{klein}(3)$ = 1,7 °C auf $\Delta T_{groß}(3)$ = 3,8 °C (Faktor 2,2) vom Anfang der Betriebszeit an und bis zum Ende der Betriebszeit dann noch von $\Delta T_{klein}(4)$ = 4 °C auf $\Delta T_{groß}(4)$ = 9,6 °C (Faktor 2,4) am Ende der Betriebszeit durch das Produkt-Fouling, über die gesamte Wärmeaustauschfläche A gesehen, insgesamt eine geringere Beladungsmenge als beim bekannten Verfahren. Dieser Sachverhalt ist insbesondere dem Sachverhalt zu Beginn und in der ersten Hälfte der Betriebszeit geschuldet, wo die Temperaturspreizung, d.h. das Verhältnis von $\Delta T_{groß}(3)$= 3,8 °C zu $\Delta T_{klein}(3)$ = 1,7 °C, lediglich Faktor 2,2 beträgt, während sie sich beim bekannten Verfahren mit $\Delta T_{groß}(1)$ = 5,6 °C zu $\Delta T_{klein}(1)$ = 0,9 °C mit Faktor 6,2 auf das Produkt-Fouling auswirkt.

Eine Gegenüberstellung der relevanten Daten des Wärmeaustauschs beim bekannten Verfahren gemäß **Figur 2** und des erfindungsgemäßen Verfahrens gemäß **Figur 5** zeigt die nachfolgende **Tabelle:**

# EP 3 503 734 B1

**Tabelle**

| Bezeichnung | Figur 2 | | Figur 5 | |
|---|---|---|---|---|
| Maßeinheit | | [°C] | | [°C] |
| Produkt-Eintrittstemperatur | $T_{PE}$ | 125,0 | $T_{PE}$ | 125,0 |
| Produkt-Austrittstemperatur | $T_{PA}$ | 140,0 | $T_{PA}$ | 140,0 |
| Heizmedium-Eintrittstemperatur | $T_{ME}(1)$ | 140,9 | $T_{ME}(3)$ | 141,7 |
| Heizmed ium-Eintrittstemperatur | $T_{ME}(2)$ | 144,5 | $T_{ME}(4)$ | 144,0 |
| Heizmedium-Austrittstemperatur | $T_{MA}(1)$ | 130,6 | $T_{MA}(3)$ | 128,8 |
| Heizmedium-Austrittstemperatur | $T_{MA}(2)$ | 134,2 | $T_{MA}(4)$ | 134,6 |
| kleine Temperatur-Differenz | $\Delta T_{klein}(1)$ | 0,9 | $\Delta T_{klein}(3)$ | 1,7 |
| kleine Temperatur-Differenz | $\Delta T_{klein}(2)$ | 4,5 | $\Delta T_{klein}(4)$ | 4,0 |
| große Temperatur-Differenz | $\Delta T_{groß}(1)$ | 5,6 | $\Delta T_{groß}(3)$ | 3,8 |
| große Temperatur-Differenz | $\Delta T_{groß}(2)$ | 9,2 | $\Delta T_{groß}(4)$ | 9,6 |
| mittlere logarithmische Temperatur-Differenz | $\Delta T_m(1)$ | 2,6 | $\Delta T_m(3)$ | 2,6 |
| mittlere logarithmische Temperatur-Differenz | $\Delta T_m(2)$ | 6,6 | $\Delta T_m(4)$ | 6,4 |
| Maßeinheit | | [1] | | [1] |
| Massenstrom-Verhältnis | f(1) | 1,43 | f(3) | 1,14 |
| Massenstrom-Verhältnis | f(2) | 1,43 | f(4) | 1,57 |

Ein in **Figur 5** wiederum mit $T_P(I_x)'$ bezeichneter produktspezifischer Grenz-Temperatur-Verlauf des Produktstroms Fp ist hinsichtlich seines linearen Verlaufs zwischen Produkt-Eintrittstemperatur $T_{PE}$ und Produkt-Austrittstemperatur $T_{PA}$, ebenso wie ein nicht dargestellter linearer Temperaturverlauf im Heizmediumstrom $F_M$, theoretischer Natur, wie vorstehend im Zusammenhang mit dem bekannten Verfahren bereits angegeben. Beim erfindungsgemäßen Verfahren ist es im Rahmen der zur Verfügung stehenden Einflussgrößen gelungen, wie **Figur 5** zeigt, den tatsächlichen Temperaturverlauf im Produkt P und im Heizmedium M näher zusammenzuführen als beim bekannten Verfahren.

**Figur 5** zeigt auch anschaulich die Verfahrensschritte D1 bzw. D2 und E und F. Eine zulässige Temperatur-Abweichung nach unten ist mit $-[\Delta T_P]_o$ und eine nach oben ist mit $+[\Delta T_P]_o$ bezeichnet. Daraus ergeben sich ein unterer Grenztemperatur-Verlauf $[T_P(I_x)]^*$ und ein oberer Grenztemperatur-Verlauf $[T_P(I_x)]^{**}$. Der produktspezifische Temperatur-Verlauf $T_P(I_x)$ wird im Bereich nahe dem Produkt-Ausgang $A_P$ durch die erfindungsgemäße Anordnung der Temperatur-Messstellen 22.3 über die diskreten Temperaturen $T_P$ gemessen. Dabei ist die erste Produkt-Temperatur $T_{P1}$ an dem diskreten Wärmeaustauschweg $I_{x1}$ verortet $(T_P(I_{x1}))$ und die zweite Produkt-Temperatur $T_{P2}$ und die dritte Produkt-Temperatur $T_{P3}$ werden, in Strömungsrichtung des flüssigen Produkts P, in Reihe zueinander und voneinander um jeweils den Messstellenabstand $\Delta I$ beabstandet gemessen. Bricht der produktspezifische Temperatur-Verlauf $T_P(I_x)$ insbesondere aus diesem Bereich aus, dann wird erfindungsgemäß, wie vorstehend beschrieben und in **Figur 3** verdeutlicht, durch die Einflussgrößen Soll-Heizmedium-Eintrittstemperatur $T_M^*$ und Soll-Heizmedium-Strom $F_M^*$ gegengesteuert.

Die erfindungsgemäße Wärmeaustauschereinheit 22 ist, wie in **Figur 6** dargestellt, in mehrere in Reihe miteinander geschaltete Sektionen 22a unterteilt. Benachbarte Sektionen 22a sind dabei produktseitig jeweils über ein vom flüssigen Produkt P durchströmtes erstes Verbindungsglied 32 und heizmediumseitig über ein zweites Verbindungglied 33 miteinander verbunden, wobei im Bedarfsfalle in einer notwendigen Anzahl erster Verbindungsglieder 32 die jeweilige Temperatur-Messstelle 22.3 vorgesehen ist.

Die apparative Ausgestaltung der Wärmeaustauschereinheit 22 nach der Erfindung gestaltet sich besonders einfach, da diese als Rohr-Wärmeaustauscher ausgeführt ist (**Figur 6**), bei der der Wärme aufnehmende Produktraum 22.1 und der Wärme abgebende Heizmediumraum 22.2, der den Produktraum 22.1 außenseits umschließt, jeweils vorzugsweise die Form einer geraden Rohrstrecke aufweisen. Die Aufteilung der Rohrstrecke in Abschnitte gleicher oder auch unterschiedlicher Länge ergibt die Sektionen 22a. Hier gibt es zwei sich grundsätzlich unterscheidende Ausführungsformen, nämlich eine erste, bei der die einzelne Sektion 22a des Rohr-Wärmeaustauschers 22 produktseitig jeweils als vom flüssigen Produkt P durchströmtes Monorohr 22.1* ausgebildet ist, das von dem Heizmediumraum 22.2 in Form eines rohrförmigen Außenmantels konzentrisch umschlossen ist (**Figur 6a**).

Bei der zweiten Ausführungsform, einem sogenannten Rohrbündel-Wärmeaustauscher 22, ist die einzelne

13

Sektion 22a als Rohrbündel 22.1** mit einer Anzahl von vom flüssigen Produkt P parallel durchströmten Innenrohren 22.1*** (**Figur 6b**) ausgebildet. Dabei sind diese Innenrohre 22.1*** nicht nur, wie vereinfachend in **Figur 6b** gezeigt, in der Meridianebene des Heizmediumraumes 22.2 angeordnet, der die Innenrohre 22.1*** insgesamt als rohrförmiger Außenmantel umschließt, sondern sie verteilen sich möglichst gleichmäßig über den gesamten Querschnitt dieses Außenmantels.

Wie **Figur 6** zeigt, ist das erste Verbindungsglied 32 jeweils vorzugsweise als Verbindungsbogen, beispielsweise als 180-Grad Rohrbogen, oder als Verbindungsarmatur mit anderer geometrischer Form, die notwendigerweise einen Innendurchgang sicherstellt, ausgebildet. Das zweite Verbindungsglied 33 ist beispielsweise in Form eines kurzen Rohrstutzens ausgeführt, der benachbarte Außenmäntel des Heizmediumraumes 22.2, jeweils in ihrem Endbereich, miteinander verbindet.

Durch die vorstehend aufgezeigte Ausgestaltung der Wärmeaustauschereinheit 22 in Form eines in Sektionen 22a unterteilten Rohr- oder Rohrbündel-Wärmeaustauschers 22 ist die Anordnung der notwendigen Temperatur-Messstellen 22.3 sehr einfach möglich, weil der Zugang zum Produktstrom $F_P$ in definierten Messstellenabständen $\Delta l$ jeweils über das erste Verbindungsglied 32 unmittelbar gegeben ist, ohne dass in die Sektion 22a selbst und auf komplizierte Weise durch den Heizmediumraum 22.2 hindurch eingegriffen werden muss. An den Temperatur-Messstellen 22.3 lassen sich im Ausführungsbeispiel durch die jeweilige Messeinrichtung für diskrete Produkt-Temperatur 25 die erste, die zweite und die dritte Produkt-Temperatur $T_{P1}$ bzw. $T_{P2}$ bzw. $T_{P3}$, gewinnen. Die Anordnung der zugeordneten Temperatur-Messstellen 22.3 ist im Ausführungsbeispiel in Anlehnung an **Figur 4** derart getroffen, dass sie, in Strömungsrichtung des flüssigen Produkts P gesehen, oberstromig des Produkt-Ausgangs $A_P$ und in definiertem Abstand von diesem und zwangsläufig in Reihe zueinander und voneinander definiert beabstandet, nämlich im Abstand der vorzugsweise gleichen jeweiligen Länge der Sektion 22a, angeordnet sind.

BEZUGSZEICHENLISTE DER VERWENDETEN ABKÜRZUNGEN

**Figuren 1** und **2 (Stand der Technik)**

| | |
|---|---|
| 10 | Anordnung nach dem Stand der Technik |
| 21 | vorgeordnete Prozesseinheit |
| 22 | Wärmeaustauschereinheit |
| 22.1 | Wärme aufnehmender Produktraum |
| 22.2 | Wärme abgebender Heizmediumraum |
| 23 | nachgeordnete Prozesseinheit |
| 24 | Steuerungs- und Regelungseinheit |
| 26 | Messeinrichtung für Produktstrom ($F_P$) |
| 28.1 | Messeinrichtung für Produkt-Eintrittstemperatur ($T_{PE}$) |
| 28.2 | Messeinrichtung für Produkt-Austrittstemperatur ($T_{PA}$) |
| 29 | Messeinrichtung für Heizmediumstrom ($F_M$) |
| 30.1 | Messeinrichtung für Heizmedium-Eintrittstemperatur ($T_{ME}$) |
| 31.1 | Ausgang für Soll-Medium-Eintrittstemperatur ($T_{ME}{}^*$) |
| 31.2 | Ausgang für Soll-Heizmediumstrom ($F_M{}^*$) |
| A | Wärmeaustauschfläche (der Wärmeaustauschereinheit 22) |
| $A_M$ | Heizmedium-Ausgang |
| $A_P$ | Produkt-Ausgang |
| $E_M$ | Heizmedium-Eingang |
| $E_P$ | Produkt-Eingang |
| $F_M$ | Heizmediumstrom - in z.B. kg/s |
| $F_M{}^*$ | Soll-Heizmediumstrom |
| $F_M(1)$ | erster Heizmediumstrom |

$F_M(2)$      zweiter Heizmediumstrom
$F_P$        Produktstrom - in z.B. kg/s
$L$         gesamter Wärmeaustauschweg
$M$         Heizmedium
$P$         flüssiges Produkt
$Q$         Wärmestrom in z.B. W = J/s

$T_M$        Heizmedium-Temperatur
$T_M(I_x)$     heizmediumspezifischer Temperatur-Verlauf, allgemein
$T_{MA}$       Heizmedium-Austrittstemperatur, allgemein
$T_{MA}(1)$     erste Heizmedium-Austrittstemperatur
$T_{MA}(2)$     zweite Heizmedium-Austrittstemperatur
$T_{ME}$       Heizmedium-Eintrittstemperatur, allgemein
$T_{ME}^*$      Soll-Heizmedium-Eintrittstemperatur, allgemein
$T_{ME}(1)$     erste Heizmedium-Eintrittstemperatur
$T_{ME}(2)$     zweite Heizmedium-Eintrittstemperatur

$T_P$        Produkt-Temperatur
$T_P(I_x)$     produktspezifischer Temperatur-Verlauf, allgemein
$T_P(I_x)'$    produktspezifischer Grenztemperatur-Verlauf
$T_P(I_{x1})$   diskrete Temperatur des flüssigen Produkts
$T_{PA}$       Produkt-Austrittstemperatur
$T_{PE}$       Produkt-Eintrittstemperatur

$\Delta T_{groß}(1)$    erste große Temperaturdifferenz
$\Delta T_{groß}(2)$    zweite große Temperaturdifferenz
$\Delta T_{klein}(1)$   erste kleine Temperaturdifferenz
$\Delta T_{klein}(2)$   zweite klein Temperaturdifferenz

$\Delta T_m$      mittlere logarithmische Temperatur-Differenz, allgemein
$\Delta T_m(1)$    erste mittlere logarithmische Temperatur-Differenz
$\Delta T_m(2)$    zweite mittlere logarithmische Temperatur-Differenz

$c_M$        spezifische Wärmekapazität des Heizmediums (M) - in z.B. J/(kgK)
$c_P$        spezifische Wärmekapazität des flüssigen Produkts (P) - z.B. J/(kgK)
$f$         Massenstrom-Verhältnis, allgemein
$f(1)$       erstes Massenstrom-Verhältnis
$f(2)$       zweites Massenstrom-Verhältnis

$k$         Wärmedurchgangszahl in z.B. W/(m$^2$K) = J/(m$^2$sK); K = Kelvin
$I_x$        variabler Wärmeaustauschweg
$I_{x1}$       diskreter Wärmeaustauschweg (an der Stelle $I_{x1}$)

**Figur 3**

A1    Einstellen eines nicht bekannten produktspezifischen TemperaturVerlaufs $[T_P(I_x)]_{PE-PA}$
A2    Einstellen eines bekannten produktspezifischen Soll-TemperaturVerlaufs $[T_P(I_x)]_o$
B1    Vorgeben der Produkt-Eintrittstemperatur $T_{PE}$ und der Produkt-Austrittstemperatur $T_{PA}$ und Bereitstellen der Heizmedium-Eintrittstemperatur $T_{ME}$ und des Heizmediumstroms $F_M$
B2    Vorgeben des bekannten produktspezifischen Soll-TemperaturVerlaufs $[T_P(I_x)]_o$ und Bereitstellen des Heizmediumstroms $F_M$ mit einer Heizmedium-Eintrittstemperatur $T_{ME}$
C     Messen eines produktspezifischen Temperatur-Verlaufs $T_P(I_x)$
D1    Vergleichen der Temperaturverläufe der Verfahrensschritte (A1) und (C) und Berechnen von Temperaturabweichungen $\Delta T_P$
D2    Vergleichen der Temperaturverläufe der Verfahrensschritte (A2) und (C) und Berechnen von Temperaturabweichungen $\Delta T_P$
E     Vorgeben einer zulässigen Temperatur-Abweichung $[\Delta T_P]_o$
F     Verändern der Heizmedium-Eintrittstemperatur $T_{ME}$

G   Ermitteln eines zeitlichen Temperatur-Gradienten $\Delta T_{ME}/\Delta t$

H   Vorgeben eines Referenz-Gradienten $[\Delta T_{ME}/\Delta t]_o$

I   Vergleichen der Ergebnisse des Verfahrensschrittes (G) mit der Vorgabe nach Verfahrensschritt (H);

J   Verändern des Heizmediumstroms $F_M$

**Figuren 4** bis **6, 6a, 6b**

20   Anordnung

22a   Sektion
22.1*   Monorohr
22.1**   Rohrbündel
22.1***   Innenrohre
22.3   Temperatur-Messstelle

25   Messeinrichtung für diskrete Produkt-Temperatur $T_P$; $T_{P1}$ bis $T_{Pn}$

27.1   Messeinrichtung für Produkt-Eintrittsdruck ($p_E$)
27.2   Messeinrichtung für Produkt-Austrittsdruck ($p_A$)

30.2   Messeinrichtung für Heizmedium-Austrittstemperatur ($T_{MA}$)
32   erstes Verbindungsglied
33   zweites Verbindungsglied

$F_M(3)$   dritter Heizmediumstrom
$F_M(4)$   vierter Heizmediumstrom

$T_{MA}(3)$   dritte Heizmedium-Austrittstemperatur
$T_{MA}(4)$   vierte Heizmedium-Austrittstemperatur
$T_{ME}(3)$   dritte Heizmedium-Eintrittstemperatur
$T_{ME}(4)$   vierte Heizmedium-Eintrittstemperatur

$T_P$   diskrete Produkt-Temperatur, allgemein
$T_{P1}$   erste Produkt-Temperatur
$T_{P2}$   zweite Produkt-Temperatur
$T_{P3}$   dritte Produkt-Temperatur
$T_{Pi}$   ite-Produkt-Temperatur
$T_{Pn}$   nte Produkt-Temperatur
$[T_P(l_x)]_{PE-PA}$   nicht bekannter produktspezifischer Temperatur-Verlauf zwischen der Produkt-Eintrittstemperatur $T_{PE}$ und der Produkt-Austrittstemperatur $T_{PA}$

$[T_P(l_x)]_o$   bekannter produktspezifischer Soll-Temperatur-Verlauf
$[T_p(l_x)]^*$   unterer Grenztemperatur-Verlauf
$[T_p(l_x)]^{**}$   oberer Grenztemperatur-Verlauf

$\Delta T_{ME}/\Delta t$   zeitlicher Temperatur-Gradient
$[\Delta T_{ME}/\Delta t]_o$   Referenz-Gradient

$\Delta T_m(3)$   dritte mittlere logarithmische Temperatur-Differenz
$\Delta T_m(4)$   vierte mittlere logarithmische Temperatur-Differenz

$\Delta T_{groß}(3)$   dritte große Temperaturdifferenz
$\Delta T_{groß}(4)$   vierte große Temperaturdifferenz
$\Delta T_{klein}(3)$   dritte kleine Temperaturdifferenz
$\Delta T_{klein}(4)$   vierte kleine Temperaturdifferenz

$\pm\Delta T_P$   Temperatur-Abweichung (+: nach oben; -: nach unten)
$\pm[\Delta T_P]_o$   zulässige Temperatur-Abweichung (+: nach oben; -: nach unten)

f(3)    drittes Massenstrom-Verhältnis

f(4)    viertes Massenstrom-Verhältnis

$\Delta l$    Messstellenabstand

$p_A$    Produkt-Austrittsdruck

$p_E$    Produkt-Eintrittsdruck

t    Zeit

$\Delta t$    Zeitspanne

**Patentansprüche**

1.    Verfahren zur aseptischen Erhitzung eines flüssigen Produkts (P) in einer als Rohr-Wärmeaustauscher ausgebildeten Wärmeaustauschereinheit (22) der Erhitzerzone einer Anordnung (20) in einer UHT-Anlage, bei dem in der Wärmeaustauschereinheit (22) zwischen dem flüssigen Produkt (P) und einem Heizmedium (M) ein indirekter Wärmeaustausch an einer Wand dadurch stattfindet, dass ein in einem Wärme abgebenden Heizmediumraum (22.2) zwischen einem Heizmedium-Eingang ($E_M$) und einem Heizmedium-Ausgang ($A_M$) der Wärmeaustauschereinheit (22) strömender einziger Heizmediumstrom ($F_M$) mit einer Heizmedium-Eintrittstemperatur ($T_{ME}$) im Gegenstrom zu einem in einem Wärme aufnehmenden Produktraum (22.1) zwischen einem Produkt-Eingang ($E_P$) und einem Produkt-Ausgang ($A_P$) der Wärmeaustauschereinheit (22) strömenden einzigen Produktstrom ($F_P$) geführt wird, wobei zwischen dem Produkt-Eingang und -Ausgang ($E_P$, $A_P$) ein gesamter Wärmeaustauschweg (L) gebildet wird, bei dem der Produktstrom ($F_P$) von einer Produkt-Eintrittstemperatur ($T_{PE}$) auf eine Produkt-Austrittstemperatur ($T_{PA}$) erhitzt wird und bei dem wenigstens die Produkt-Austrittstemperatur ($T_{PA}$) und die Heizmedium-Eintrittstemperatur ($T_{ME}$) überwacht und geregelt werden, **gekennzeichnet durch** folgende Verfahrensschritte:

(A1) Einstellen eines nicht bekannten produktspezifischen Temperatur-Verlaufs ($[T_P(l_x)]_{PE-PA}$) zwischen der Produkt-Eintrittstemperatur ($T_{PE}$) und der Produkt-Austrittstemperatur ($T_{PA}$) mit Hilfe einer Zufuhr des erforderlichen Heizmediumstroms ($F_M$) mit der erforderlichen Heizmedium-Eintrittstemperatur ($T_{ME}$) an dem Heizmedium-Eingang ($E_M$) in den Heizmediumraum (22.2) und Messen diskreter Produkt-Temperaturen ($T_P$; $T_{P1}$ bis $T_{Pn}$) an vorgegebenen Messstellen (22.3) im Produktstrom ($F_P$);
(B1) Vorgeben der Produkt-Eintrittstemperatur ($T_{PE}$) an dem Produkt-Eingang ($E_P$) in den und der Produkt-Austrittstemperatur ($T_{PA}$) an dem Produkt-Ausgang ($A_P$) aus dem Produktraum (22.1) und Bereitstellen der Heizmedium-Eintrittstemperatur ($T_{ME}$) und des Heizmediumstroms ($F_M$);
(C) Messen eines produktspezifischen Temperatur-Verlaufs ($T_P(l_x)$) zwischen dem Produkt-Ausgang ($A_P$) und dem Produkt-Eingang ($E_P$) an den vorgegebenen Messstellen (22.3);
(D1) Vergleichen der Temperaturverläufe der Verfahrensschritte (A1) und (C) und Berechnen jeweiliger Temperatur-Abweichungen ($\Delta T_P$) an den vorgegebenen Messstellen (22.3);
(E) Vorgeben einer zulässigen Temperatur-Abweichung ($[\Delta T_P]_o$);
(F) Verändern der Heizmedium-Eintrittstemperatur ($T_{ME}$) auf eine Soll-Heizmedium-Eintrittstemperatur ($T_{ME}^*$) bei Überschreiten der zulässigen Temperatur-Abweichung ($[\Delta T_P]_o$) durch die berechnete Temperatur-Abweichung ($\Delta T_P$).

2.    Verfahren zur aseptischen Erhitzung eines flüssigen Produkts (P) in einer als Rohr-Wärmeaustauscher ausgebildeten Wärmeaustauschereinheit (22) der Erhitzerzone einer Anordnung (20) in einer UHT-Anlage, bei dem in der Wärmeaustauschereinheit (22) zwischen dem flüssigen Produkt (P) und einem Heizmedium (M) ein indirekter Wärmeaustausch an einer Wand dadurch stattfindet, dass ein in einem Wärme abgebenden Heizmediumraum (22.2) zwischen einem Heizmedium-Eingang ($E_M$) und einem Heizmedium-Ausgang ($A_M$) der Wärmeaustauschereinheit (22) strömender einziger Heizmediumstrom ($F_M$) mit einer Heizmedium-Eintrittstemperatur ($T_{ME}$) im Gegenstrom zu einem in einem Wärme aufnehmenden Produktraum (22.1) zwischen einem Produkt-Eingang ($E_P$) und einem Produkt-Ausgang ($A_P$) der Wärmeaustauschereinheit (22) strömenden einzigen Produktstrom ($F_P$) geführt wird, wobei zwischen dem Produkt-Eingang und -Ausgang ($E_P$, $A_P$) ein gesamter Wärmeaustauschweg (L) gebildet wird, bei dem der Produktstrom ($F_P$) von einer Produkt-Eintrittstemperatur ($T_{PE}$) auf eine Produkt-Austrittstemperatur ($T_{PA}$) erhitzt wird und bei dem wenigstens die Produkt-Austrittstemperatur ($T_{PA}$) und die Heizmedium-Eintrittstemperatur ($T_{ME}$) überwacht und geregelt werden, **gekennzeichnet durch** folgende Verfahrensschritte:

(A2) Einstellen eines bekannten produktspezifischen Soll-Temperatur-Verlaufs ($[T_P(I_x)]_o$) mit Hilfe des Messens diskreter Produkt-Temperaturen ($T_P$; $T_{P1}$ bis $T_{Pn}$) an vorgegebenen Messstellen (22.3) im Produktstrom ($F_P$) und mit Hilfe einer Zufuhr des erforderlichen Heizmediumstroms ($F_M$) mit der erforderlichen Heizmedium-Eintrittstemperatur ($T_{ME}$) an dem Heizmedium-Eingang ($E_M$) in den Heizmediumraum (22.2);

(B2) Vorgeben des produktspezifischen Soll-Temperatur-Verlaufs ($[T_P(I_x)]_o$), der die Produkt-Eintrittstemperatur ($T_{PE}$) an dem Produkt-Eingang ($E_P$) in den und die Produkt-Austrittstemperatur ($T_{PA}$) an dem Produkt-Ausgang ($A_P$) aus dem Produktraum (22.1) einschließt, und Bereitstellen einer hinterlegten Zufuhr des Heizmediumstroms ($F_M$) mit einer Heizmedium-Eintrittstemperatur ($T_{ME}$);

(C) Messen eines produktspezifischen Temperatur-Verlaufs ($T_P(I_x)$) zwischen dem Produkt-Ausgang ($A_P$) und dem Produkt-Eingang ($E_P$) an den vorgegebenen Messstellen (22.3);

(D2) Vergleichen der Temperaturverläufe der Verfahrensschritte (A2) und (C) und Berechnen jeweiliger Temperatur-Abweichungen ($\pm\Delta T_P$) an den vorgegebenen Messstellen (22.3);

(E) Vorgeben einer zulässigen Temperatur-Abweichung ($\pm[\Delta T_P]_o$);

(F) Verändern der Heizmedium-Eintrittstemperatur ($T_{ME}$) auf eine Soll-Heizmedium-Eintrittstemperatur ($T_{ME}^*$) bei Überschreiten der zulässigen Temperatur-Abweichung ($\pm[\Delta T_P]_o$) durch die berechnete Temperatur-Abweichung ($\pm\Delta T_P$).

3. Verfahren nach Anspruch 1 oder 2,
**gekennzeichnet durch** folgende Verfahrensschritte:

(G) Ermitteln eines zeitlichen Temperatur-Gradienten ($\Delta T_{ME}/\Delta t$) aus einer Änderung der Heizmedium-Eintrittstemperatur ($T_{ME}$) in einer vorgegebenen Zeitspanne ($\Delta t$);

(H) Vorgeben eines Referenz-Gradienten ($[\Delta T_{ME}/\Delta t]_o$) für einen zulässigen Temperaturanstieg der Heizmedium-Eintrittstemperatur ($T_{ME}$) in der Zeitspanne ($\Delta t$);

(I) Vergleichen der Ergebnisse des Verfahrensschrittes (G) mit der Vorgabe nach Verfahrensschritt (H);

(J) Verändern des Heizmediumstroms ($F_M$) auf einen Soll-Heizmediumstrom ($F_M^*$) bei Überschreiten des Referenz-Gradienten ($[\Delta T_{ME}/\Delta t]_o$) durch den ermittelten zeitlichen Temperatur-Gradienten ($\Delta T_{ME}/\Delta t$).

4. Verfahren nach einem der vorhergehenden Ansprüche,
**dadurch gekennzeichnet,**
**dass** das Verändern der Heizmedium-Eintrittstemperatur ($T_{ME}$) auf die jeweils erforderliche Soll-Heizmedium-Eintrittstemperatur ($T_{ME}^*$) entweder in Temperaturstufen oder durch eine stetige Temperaturänderung erfolgt.

5. Verfahren nach einem der vorhergehenden Ansprüche,
**dadurch gekennzeichnet,**
**dass** das Verändern des Heizmediumstroms ($F_M$) auf den jeweils erforderlichen Soll-Heizmediumstrom ($F_M^*$) entweder durch eine stufenweise oder eine stetige Erhöhung erfolgt.

6. Verfahren nach einem der vorhergehenden Ansprüche,
**dadurch gekennzeichnet,**
**dass** am Produkt-Eingang ($E_P$) ein Produkt-Eintrittsdruck ($p_E$) und am Produkt-Ausgang ($A_P$) ein Produkt-Austrittsdruck ($p_{A'}$) gemessen werden.

7. Anordnung (20) zur Durchführung des Verfahrens nach einem der vorhergehenden Ansprüche, mit einer als Rohr-Wärmeaustauscher ausgebildeten Wärmeaustauschereinheit (22) einer Erhitzerzone in einer UHT-Anlage, mit der Wärmeaustauschereinheit (22), die, in Strömungsrichtung eines indirekt zu erhitzenden flüssigen Produkts (P) gesehen, zwischen einer vorgeordneten Prozesseinheit (21) und einer nachgeordneten Prozesseinheit (23) angeordnet ist, mit der Wärmeaustauschereinheit (22), die einen zwischen einem Produkt-Eingang ($E_P$) und einem Produkt-Ausgang ($A_P$) durchströmten, Wärme aufnehmenden Produktraum (22.1) und einen zwischen einem Heizmedium-Eingang ($E_M$) und einem Heizmedium-Ausgang ($A_M$) durchströmten, Wärme abgebenden unverzweigten Heizmediumraum (22.2) aufweist, der den Produktraum (22.1) in Form eines rohrförmigen Außenmantels umschließt, wobei zwischen dem Produkt-Eingang und -Ausgang ($E_P$, $A_P$) ein gesamter Wärmeaustauschweg (L) gebildet wird, mit wenigstens einer Messeinrichtung für Produktstrom (26), einer Messeinrichtung für Produkt-Eintrittstemperatur (28.1), einer Messeinrichtung für Produkt-Austrittstemperatur (28.2), einer Messeinrichtung für Heizmediumstrom (29) und einer Messeinrichtung für Heizmedium-Eintrittstemperatur (30.1), und mit einer Steuerungs- und Regelungseinheit (24), die in Abhängigkeit von wenigstens den Messeinrichtungen (26, 28.1, 28.2, 29, 30.1) einen an der Steuerungs- und Regelungseinheit (24) vorgesehenen Ausgang für Soll-Heizmedium-Eintrittstemperatur (31.1) und einen Ausgang für Soll-Heizmediumstrom (31.2) steuert,

**dadurch gekennzeichnet,**
**dass** im Produktraum (22.1) der Wärmeaustauschereinheit (22), oberstromig des Produkt-Ausgangs (A$_P$) und diesem im definierten Abstand benachbart, wenigstens eine Temperatur-Messstelle (22.3) vorgesehen ist, die über eine jeweils zugeordnete Messeinrichtung für diskrete Produkt-Temperatur (25) zur Messung diskreter Produkt-Temperaturen (T$_P$; T$_{P1}$ bis T$_{Pn}$) mit der Steuerungs- und Regelungseinheit (24) verbunden ist.

**8.** Anordnung nach Anspruch 7,
**dadurch gekennzeichnet,**
**dass** bei mehr als einer Temperatur-Messstelle (22.3) diese, entgegen der Strömungsrichtung des flüssigen Produkts (P), in Reihe zueinander und voneinander definiert beabstandet angeordnet sind.

**9.** Anordnung nach Anspruch 7 oder 8,
**dadurch gekennzeichnet,**
**dass** die wenigstens eine Temperatur-Messstelle (22.3) wenigstens im letzten Drittel des durchströmten Produktraumes (20.1) angeordnet ist/sind.

**10.** Wärmeaustauschereinheit (22) für eine Anordnung (20) nach einem der Ansprüche 7 bis 9,
**dadurch gekennzeichnet,**
**dass** die als Rohr-Wärmeaustauscher ausgebildete Wärmeaustauschereinheit (22) in mehrere in Reihe miteinander geschaltete Sektionen (22a) unterteilt ist, die produktseitig jeweils als durchströmtes Monorohr (22.1*) oder als Rohrbündel (22.1**) mit einer Anzahl von parallel durchströmten Innenrohren (22.1***) ausgebildet sind, dass das Monorohr (22.1*) oder das Rohrbündel (22.1**) jeweils von einem unverzweigten Heizmediumraum (22.2) in Form eines rohrförmigen Außenmantels umschlossen ist, dass benachbarte Sektionen (22a) produktseitig jeweils über ein durchströmtes erstes Verbindungsglied (32) und heizmediumseitig über ein durchströmtes zweites Verbindungsglied (33) miteinander verbunden sind, dass das erste Verbindungsglied (32) jeweils als Verbindungsbogen oder als Verbindungsarmatur ausgebildet ist und dass im ersten Verbindungsglied (32) die jeweilige Temperatur-Messstelle (22.3) vorgesehen ist.

## Claims

**1.** A method for the aseptic heating of a liquid product (P) in a heat exchanger unit (22), designed as a tube heat exchanger, of the heating zone of an assembly (20) in a UHT system, wherein an indirect exchange of heat occurs at a wall in the heat exchanger unit (22) between the liquid product (P) and a heating medium (M) such that a single heating medium flow (F$_M$) flowing in a heat-releasing heating medium chamber (22.2) at a heating medium inlet temperature (T$_{ME}$) between a heating medium inlet (E$_M$) and a heating medium outlet (A$_M$) of the heat exchanger unit (22) is guided in a countercurrent to a single product flow (F$_P$) flowing in a heat-absorbing product chamber (22.1) between a product inlet (E$_P$) and a product outlet (A$_P$) of the heat exchanger unit (22), wherein an overall heat exchanging path (L) is formed between the product inlet and outlet (E$_P$, A$_P$), wherein the product flow (F$_P$) is heated from a product inlet temperature (T$_{PE}$) to a product outlet temperature (T$_{PA}$), and wherein at least the product outlet temperature (T$_{PA}$) and the heating medium inlet temperature (T$_{ME}$) are monitored and regulated,
**characterized by** the following method steps:

(A1) adjusting an unknown product-specific temperature profile ([T$_P$(I$_x$)]$_{PE-PA}$) between the product inlet temperature (T$_{PE}$) and the project outlet temperature (T$_{PA}$) with the assistance of a supply of the required heating medium flow (F$_M$) at the required heating medium inlet temperature (T$_{ME}$) to the heating medium entrance (E$_M$) in the heating medium chamber (22.2), and measuring discrete product temperatures (T$_P$; T$_{P1}$ to T$_{Pn}$) at given measuring points (22.3) in the product flow (F$_P$);
(B1) specifying the product inlet temperature (T$_{PE}$) at the product inlet (E$_P$) into the, and the product outlet temperature (T$_{PA}$) at the product outlet (A$_P$) out of the product chamber (22.1), and providing the heating medium inlet temperature (T$_{ME}$) and the heating medium flow (F$_M$);
(C) measuring a product-specific temperature profile (T$_P$(I$_X$)) between the product outlet (A$_P$) and the product inlet (E$_P$) at the given measuring points (22.3);
(D1) comparing the temperature profiles from the method steps (A1) and (C), and calculating each of the temperature deviations ($\Delta$T$_P$) at the given measuring points (22.3);
(E) specifying a permissible temperature deviation ([$\Delta$T$_P$]$_o$);
(F) modifying the heating medium inlet temperature (T$_{ME}$) to a target heating medium inlet temperature (T$_{ME}$*) if the permissible temperature deviation ([$\Delta$T$_P$]$_o$) is exceeded by the calculated temperature deviation ($\Delta$T$_P$).

2. The method for the aseptic heating of a liquid product (P) in a heat exchanger unit (22), designed as a tube heat exchanger, of the heating zone of an assembly (20) in a UHT system, wherein an indirect exchange of heat occurs at a wall in the heat exchanger unit (22) between the liquid product (P) and a heating medium (M) such that a single heating medium flow ($F_M$) flowing in a heat-releasing heating medium chamber (22.2) at a heating medium inlet temperature ($T_{ME}$) between a heating medium inlet ($E_M$) and a heating medium outlet ($A_M$) of the heat exchanger unit (22) is guided in a countercurrent to a single product flow ($F_P$) flowing in a heat-absorbing product chamber (22.1) between a product inlet ($E_P$) and a product outlet ($A_P$) of the heat exchanger unit (22), wherein an overall heat exchanging path (L) is formed between the product inlet and outlet ($E_P$, $A_P$), wherein the product flow ($F_P$) is heated from a product inlet temperature ($T_{PE}$) to a product outlet temperature ($T_{PA}$), and wherein at least the product outlet temperature ($T_{PA}$) and the heating medium inlet temperature ($T_{ME}$) are monitored and regulated, **characterized by** the following method steps:

(A2) adjusting a known product-specific target temperature profile ($[T_p(l_x)]_o$) with the assistance of measuring discrete product temperatures ($T_P$; $T_{P1}$ to $T_{Pn}$) at given measuring points (22.3) in the production flow (Fp) and with the assistance of a supply of the required heating medium flow ($F_M$) at the necessary heating medium inlet temperature ($T_{ME}$) at the heating medium inlet ($E_M$) in the heating medium chamber (22.2);
(B2) specifying the product-specific target temperature profile ($[T_p(l_x)]_o$), which includes the product inlet temperature ($T_{PE}$) at the product inlet ($E_P$) into the, and the product outlet temperature ($T_{PA}$) at the product outlet ($A_P$) out of the product chamber (22.1), and providing a stored supply of the heating medium flow ($F_M$) at a heating medium inlet temperature ($T_{ME}$);
(C) measuring a product-specific temperature profile ($T_P(l_X)$) between the product outlet ($A_P$) and the product inlet ($E_P$) at the given measuring points (22.3);
(D2) comparing the temperature profiles from the method steps (A2) and (C), and calculating the temperature deviations ($\pm\Delta T_P$) at the given measuring points (22.3);
(E) specifying a permissible temperature deviation ($\pm[\Delta T_P]_o$);
(F) modifying the heating medium inlet temperature ($T_{ME}$) to a target heating medium inlet temperature ($T_{ME}$*) if the permissible temperature deviation ($\pm[\Delta T_P]_o$) is exceeded by the calculated temperature deviation ($\pm\Delta T_P$).

3. The method according to claim 1 or 2, **characterized by** the following method steps:

(G) ascertaining a temperature gradient over time ($\Delta T_{ME}/\Delta t$) from a change in the heating medium inlet temperature ($T_{ME}$) within a given time span ($\Delta t$);
(H) specifying a reference gradient ($[\Delta T_{ME}/\Delta t]_o$) for a permissible temperature rise of the heating medium inlet temperature ($T_{ME}$) within the time span ($\Delta t$);
(I) comparing the results of method step (G) with the specification according to method step (H);
(J) changing the heating medium flow ($F_M$) to a target heating medium flow ($F_M$*) when the reference gradient ($[\Delta T_{ME}/\Delta t]_o$) is exceeded by the ascertained temperature gradient ($\Delta T_{ME}/\Delta t$) over time.

4. The method according to one of the preceding claims, **characterized in that** the changing of the heating medium inlet temperature ($T_{ME}$) to the required target heating medium inlet temperature ($T_{ME}$*) in each case is performed either in temperature stages, or by a gradual temperature change.

5. The method according to one of the preceding claims, **characterized in that** the changing of the heating medium flow ($F_M$) to the required target heating medium flow ($F_M$*) in each case occurs either in a stepwise increase or a gradual increase.

6. The method according to one of the preceding claims, **characterized in that** a project inlet pressure ($\rho_E$) is measured at the product inlet ($E_P$), and a product outlet pressure ($\rho_A$) is measured at the product outlet ($A_P$).

7. An assembly (20) for performing the method according to one of the preceding claims with a heat exchanger unit (22), designed as a tube heat exchanger, of a heater zone in a UHT system, with the heat exchanger unit (22) being arranged, viewed in the direction of flow of a liquid product (P) to be heated indirectly, between an upstream process unit (21) and a downstream process unit (23), with the heat exchanger unit (22) having a heat-absorbing product chamber (22.1) through which a flow flows between a product inlet (E_P) and a product outlet (A_P) and a heat-emitting, unbranched heating medium chamber (22.2) through which a flow flows between a heating medium inlet (E_M) and a heating medium outlet (A_M), said heating medium chamber enclosing the product chamber (22.1) in the form of a tubular outer jacket, wherein an overall heat exchanging path (L) is formed between the product inlet and outlet (E_P, A_P), with at least one measuring apparatus for the product flow (26), one measuring apparatus for the product inlet temperature (28.1), one measuring apparatus for the product outlet temperature (28.2), one measuring apparatus for the heating medium flow (29), and one measuring apparatus for the heating medium inlet temperature (30.1), and with a control and regulating unit (24) that, depending on at least the measuring apparatuses (26, 28.1, 28.2, 29, 30.1), controls an outlet provided in the control and regulating unit (24) for the target heating medium inlet temperature (31.1), and an outlet for the target heating medium flow (31.2),
**characterized in that**
at least one temperature measuring point (22.3) is provided in the product chamber (22.1) of the heat exchanger unit (22) upstream from the product outlet (A_P) and adjacent thereto at a specific distance, said temperature measuring point being connected in each case via an assigned measuring apparatus for a discrete product temperature (25) to measure discrete product temperatures (T_P; T_{P1} to T_{Pn}) to the control and regulating unit (24).

**8.** The assembly according to claim 7,
**characterized in that**
when there is more than one temperature measuring point (22.3), they are arranged in a row relative to each other and at a specific distance from each other opposite the direction of flow of the liquid product (P).

**9.** The assembly according to claim 7 or 8,
**characterized in that**
the at least one temperature measuring point (22.3) is/are arranged at least within the last third of the project chamber (20.1) through which a flow flows.

**10.** A heat exchanger unit (22) for an assembly (20) according to one of claims 7 to 9,
**characterized in that**
the heat exchanger unit (22) designed as a tube heat exchanger is subdivided into a plurality of series-connected sections (22a) that are each designed on the product side as a monotube (22.1*) through which a flow flows, or as a tube bundle (22.1**) with a plurality of parallel inner tubes (22.1***) through which a flow flows, the monotube (22.1*) or the tube bundle (22.1**) are each enclosed by an unbranched heating medium chamber (22.2) in the form of a tubular outer jacket, adjacent sections (22a) are each connected to each other on the product side by a first connecting element (32) through which a flow flows and on the heating medium side by a second connecting element (33) through which a flow flows, the first connecting element (32) is in each case designed as a connecting elbow or a connecting fitting, and the respective temperature measuring point (22.3) is provided in the first connecting element (32).

**Revendications**

**1.** Procédé de chauffage aseptique d'un produit liquide (P) dans une unité d'échangeur de chaleur (22) conçue comme un échangeur de chaleur tubulaire de la zone de chauffage d'un système (20) dans une installation UHT, dans lequel un échange de chaleur indirect a lieu sur une paroi dans l'unité d'échangeur de chaleur (22) entre le produit liquide (P) et un fluide chauffant (M), du fait qu'un flux de fluide chauffant (F_M) unique s'écoulant dans une chambre de fluide chauffant dégageant de la chaleur (22.2) entre une entrée de fluide chauffant (E_M) et une sortie de fluide chauffant (A_M) de l'unité d'échangeur de chaleur (22) est guidé à une température d'entrée de fluide chauffant (T_{ME}) à contre-courant d'un flux de produit (F_P) unique s'écoulant dans une chambre de produit recevant la chaleur (22.1) entre une entrée de produit (E_P) et une sortie de produit (A_P) de l'unité d'échangeur de chaleur (22), un trajet d'échange de chaleur complet (L) étant formé entre l'entrée et la sortie de produit (E_P, A_P), dans lequel le flux de produit (F_P) est chauffé d'une température d'entrée de produit (T_{PE}) à une température de sortie de produit (T_{PA}) et dans lequel au moins la température de sortie de produit (T_{PA}) et la température d'entrée de fluide chauffant (T_{ME}) sont surveillées et réglées,
**caractérisé par** les étapes de procédé suivantes :

(A1) réglage d'une variation de température spécifique au produit inconnue ([T_P(I_x)]_{PE-PA}) entre la température d'entrée de produit (T_{PE}) et la température de sortie de produit (T_{PA}) à l'aide d'un apport du flux de fluide chauffant (F_M) requis à la température d'entrée de fluide chauffant (T_{ME}) nécessaire à l'entrée de fluide chauffant

($E_M$) dans la chambre de fluide chauffant (22.2), et mesure de températures de produit discrètes ($T_P$ ; $T_{P1}$ à $T_{Pn}$) à des points de mesure prédéfinis (22.3) dans le flux de produit ($F_P$) ;

(B1) définition d'une température d'entrée de produit ($T_{PE}$) à l'entrée de produit ($E_P$) dans la chambre de produit (22.1) et de la température de sortie de produit ($T_{PA}$) à la sortie de produit ($A_P$) hors de la chambre de produit (22.1) et mise à disposition de la température d'entrée de fluide chauffant ($T_{ME}$) et du flux de fluide chauffant ($F_M$) ;

(C) mesure d'une variation de température spécifique au produit ($T_P(I_x)$) entre la sortie de produit ($A_P$) et l'entrée de produit ($E_P$) aux points de mesure prédéfinis (22.3) ;

(D1) comparaison des variations de température des étapes de procédé (A1) et (C) et calcul d'écarts de température ($\Delta T_P$) respectifs aux points de mesure prédéfinis (22.3) ;

(E) définition d'un écart de température autorisé ($[\Delta T_P]_0$) ;

(F) modification de la température d'entrée de fluide chauffant ($T_{ME}$) à une température d'entrée de fluide chauffant de consigne ($T_{ME}^*$) lorsque l'écart de température ($\Delta T_P$) calculé dépasse l'écart de température autorisé ($[\Delta T_P]_0$).

**2.** Procédé de chauffage aseptique d'un produit liquide (P) dans une unité d'échangeur de chaleur (22) conçue comme un échangeur de chaleur tubulaire de la zone de chauffage d'un système (20) dans une installation UHT, dans lequel un échange de chaleur indirect a lieu sur une paroi dans l'unité d'échangeur de chaleur (22) entre le produit liquide (P) et un fluide chauffant (M), du fait qu'un flux de fluide chauffant ($F_M$) unique s'écoulant dans une chambre de fluide chauffant dégageant de la chaleur (22.2) entre une entrée de fluide chauffant ($E_M$) et une sortie de fluide chauffant ($A_M$) de l'unité d'échangeur de chaleur (22) est guidé à une température d'entrée de fluide chauffant ($T_{ME}$) à contre-courant d'un flux de produit ($F_P$) unique s'écoulant dans une chambre de produit recevant la chaleur (22.1) entre une entrée de produit ($E_P$) et une sortie de produit ($A_P$) de l'unité d'échangeur de chaleur (22), un trajet d'échange de chaleur complet (L) étant formé entre l'entrée et la sortie de produit ($E_P$, $A_P$), dans lequel le flux de produit ($F_P$) est chauffé d'une température d'entrée de produit ($T_{PE}$) à une température de sortie de produit ($T_{PA}$) et dans lequel au moins la température de sortie de produit ($T_{PA}$) et la température d'entrée de fluide chauffant ($T_{ME}$) sont surveillées et réglées,

**caractérisé par** les étapes de procédé suivantes :

(A2) réglage d'une variation de température de consigne spécifique au produit connue ($[T_P(I_x)_0]$) à l'aide de la mesure de températures de produit discrètes ($T_P$ ; $T_{P1}$ à $T_{Pn}$) des points de mesure prédéfinis (22.3) dans le flux de produit ($F_P$) et à l'aide d'un apport du flux de fluide chauffant ($F_M$) requis à la température d'entrée de fluide chauffant ($T_{ME}$) nécessaire à l'entrée de fluide chauffant ($E_M$) dans la chambre de fluide chauffant (22.2) ;

(B2) définition de la variation de température de consigne spécifique au produit connue ($[T_P(I_x)_0]$) incluant la température d'entrée de produit ($T_{PE}$) à l'entrée de produit ($E_P$) dans la chambre de produit (22.1) et la température de sortie de produit ($T_{PA}$) à la sortie de produit ($A_P$) hors de la chambre de produit (22.1), et mise à disposition d'un apport déposé du flux de fluide chauffant ($F_M$) à une température d'entrée de fluide chauffant ($T_{ME}$) ;

(C) mesure d'une variation de température spécifique au produit ($T_P(I_x)$) entre la sortie de produit ($A_P$) et l'entrée de produit ($E_P$) aux points de mesure prédéfinis (22.3) ;

(D2) comparaison des variations de température des étapes de procédé (A2) et (C) et calcul d'écarts de température ($\pm\Delta T_P$) respectifs aux points de mesure prédéfinis (22.3) ;

(E) définition d'un écart de température autorisé ($\pm[\Delta T_P]_0$) ;

(F) modification de la température d'entrée de fluide chauffant ($T_{ME}$) à une température d'entrée de fluide chauffant de consigne ($T_{ME}^*$) lorsque l'écart de température calculé ($\pm\Delta T_P$) calculé dépasse l'écart de température autorisé ($\pm[\Delta T_P]_0$).

**3.** Procédé selon la revendication 1 ou 2,
**caractérisé par** les étapes de procédé suivantes :

(G) détermination d'un gradient de température temporel ($\Delta T_{ME}/\Delta t$) à partir d'une modification de la température d'entrée de fluide chauffant ($T_{ME}$) pendant une période temps prédéfinie ($\Delta t$) ;

(H) définition d'un gradient de référence ($[\Delta T_{ME}/\Delta t]_0$) pour une augmentation de température autorisée de la température d'entrée de fluide chauffant ($T_{ME}$) pendant la période de temps ($\Delta t$) ;

(I) comparaison des résultats de l'étape de procédé (G) avec la définition selon l'étape de procédé (H) ;

(J) modification du flux de fluide chauffant ($F_M$) de manière à obtenir un flux de fluide chauffant de consigne ($F_M^*$) lorsque le gradient de température temporel déterminé ($\Delta T_{ME}/\Delta t$) dépasse le gradient de référence ($[\Delta T_{ME}/\Delta t]_0$).

**4.** Procédé selon l'une des revendications précédentes,
**caractérisé en ce que**

- la modification de la température d'entrée de fluide chauffant ($T_{ME}$) à la température d'entrée de fluide chauffant de consigne ($T_{ME}$*) respectivement requise est effectuée soit par paliers de température ou une modification de température progressive.

**5.** Procédé selon l'une des revendications précédentes,
**caractérisé en ce que**

- la modification du flux de fluide chauffant ($F_M$) de manière à obtenir le flux de fluide chauffant de consigne ($F_M$*) respectivement requis est effectuée par une augmentation par paliers ou progressive.

**6.** Procédé selon l'une des revendications précédentes,
**caractérisé en ce que**

- une pression d'entrée de produit ($p_E$) est mesurée à l'entrée de produit ($E_P$) et une pression de sortie de produit ($p_A$) est mesurée à la sortie de produit ($A_P$).

**7.** Système (20) pour la mise en œuvre du procédé selon l'une des revendications précédentes, comprenant une unité d'échangeur de chaleur (22) conçue comme un échangeur de chaleur tubulaire d'une zone de chauffage dans une installation UHT, l'unité d'échangeur de chaleur (22) étant disposée entre une unité de traitement (21) installée en amont et une unité de traitement (23) installée en aval, vue dans la direction d'écoulement d'un produit liquide (P) à chauffer indirectement, l'unité d'échangeur de chaleur (22) présentant une chambre de produit (22.1) recevant de la chaleur, traversée par un flux entre une entrée de produit ($E_P$) et une sortie de produit ($A_P$), et une chambre de fluide chauffant (22.2) non ramifiée dégageant de la chaleur, traversée par un flux entre une entrée de fluide chauffant ($E_M$) et une sortie de fluide chauffant ($A_M$), laquelle entoure la chambre de produit (22.1) sous la forme d'une enveloppe extérieure tubulaire, dans lequel un trajet d'échange de chaleur complet (L) étant formé entre l'entrée et la sortie de produit ($E_P$, $A_P$), comprenant au moins un dispositif de mesure de flux de produit (26), un dispositif de mesure de température d'entrée de produit (28.1), un dispositif de mesure de température de sortie de produit (28.2), un dispositif de mesure de flux de fluide chauffant (29) et un dispositif de mesure de température d'entrée de fluide chauffant (30.1), et comprenant une unité de commande et de réglage (24) commandant une sortie pour la température d'entrée de fluide chauffant de consigne (31.1) prévue sur l'unité de commande et de réglage (24) et une sortie pour le flux de fluide chauffant de consigne (31.2), au moins en fonction des dispositifs de mesure (26, 28.1, 28.2, 29, 30.1), **caractérisé en ce que** dans la chambre de produit (22.1) de l'unité d'échangeur de chaleur (22), en amont de la sortie de produit ($A_P$) et à proximité de celle-ci, à une distance définie, il est prévu au moins un point de mesure de température (22.3) relié à l'unité de commande et de réglage (24) par le biais d'un dispositif de mesure de la température de produit discrète (25) respectivement attribué, pour mesurer des températures de produit discrètes ($T_P$ ; $T_{P1}$ à $T_{Pn}$).

**8.** Système selon la revendication 7,
**caractérisé en ce que**

- en présence de plusieurs points de mesure de température (22.3), ceux-ci sont disposés en rangée les uns par rapport aux autres et espacés les uns des autres selon une distance définie, contre la direction d'écoulement du produit liquide (P).

**9.** Système selon la revendication 7 ou 8,
**caractérisé en ce que**

- l'au moins un point de mesure de température (22.3) est disposé au moins dans le dernier tiers de la chambre de produit (22.1) traversée par le flux.

**10.** Unité d'échangeur de chaleur (22) pour un système (20) selon l'une des revendications 7 à 9,
**caractérisée en ce que**

- l'unité d'échangeur de chaleur (22) conçue comme un échangeur de chaleur tubulaire est divisée en plusieurs sections (22a) reliées entre elles en série dans plusieurs rangées, lesquelles sont respectivement conçues, côté produit, comme un monotube traversé par un flux (22.1*) ou comme un faisceau de tubes (22.1**) comprenant un certain nombre de tubes intérieurs traversés par un flux parallèlement (22.1***), **en ce que** le monotube (22.1*) ou le faisceau de tubes (22.1**) est respectivement entouré par une chambre de fluide chauffant (22.2) non ramifiée, sous la forme d'une enveloppe extérieure tubulaire, **en ce que** des sections (22a) voisines sont reliées entre elles respectivement côté produit par un premier élément de liaison traversé par un flux (32) et côté fluide chauffant par un deuxième élément de liaison traversé par un flux (33), **en ce que** le premier élément de liaison (32) est conçu respectivement comme un coude de liaison ou comme une armature de liaison et **en ce que** le point de mesure de température (22.3) respectif est prévu dans le premier élément de liaison (32).

**Fig. 1**

(Stand der Technik)

**Fig. 2**
(Stand der Technik)

Fig. 3

Fig. 4

EP 3 503 734 B1

$$f(3) = F_M(3)/F_P = 1{,}14$$
$$f(4) = F_M(4)/F_P = 1{,}57$$

**Fig. 5**

**Fig. 6a**
"Z"

**Fig. 6b**
"Z"

**Fig. 6**

EP 3 503 734 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 9403913 U1
- DE 9403913 A1

- WO 2014191062 A1